# EUROPÄISCHE PATENTSCHRIFT

(11) **EP 1 398 867 B1**
(45) Veröffentlichungstag und Bekanntmachung des Hinweises auf die Patenterteilung: **19.10.2005**
(21) Anmeldenummer: 03018523.5
(22) Anmeldetag: 16.08.2003
(51) Int. Cl.: H02M 5/40, H02J 9/06

(54) **Vorrichtung zur Spannungserhaltung eines elektrischen Wechselspannungsnetzes sowie Verfahren zum Betrieb einer solchen Vorrichtung**
Device for maintaining the voltage of an electric AC grid and method of operating the device
Stabilisateur de tension d'un réseau à tension alternatif électrique et procédé pour conduire le stabilisateur

(30) Priorität: 10.09.2002 US 237874
(43) Veröffentlichungstag der Anmeldung: 17.03.2004
(73) Patentinhaber: ABB Schweiz AG, 5400 Baden (CH)
(72) Erfinder: Steimer, Peter, 5424 Unterehrendingen (CH)
(74) Vertreter: ABB Patent Attorneys

(56) Entgegenhaltungen:
- US-A- 6 160 722
- US-A1- 2001 001 535
- US-B1- 6 169 669

## Beschreibung

### Technisches Gebiet

Die vorliegende Erfindung bezieht sich auf das Gebiet der Leistungselektronik. Sie betrifft eine Vorrichtung zur Spannungserhaltung eines elektrischen Wechselspannungsnetzes sowie ein Verfahren zum Betrieb einer solchen Vorrichtung gemäss dem Oberbegriff der unabhängigen Ansprüche.

### Stand der Technik

Herkömmliche Vorrichtungen, insbesondere Stromrichterschaltungen, wie sie heute zur Kompensation von Spannungseinbrüchen der Spannung eines elektrischen einphasigen oder mehrphasigen Wechselspannungsnetzes, wie sie infolge von Kurzschlüssen oder Lastwechseln auftreten können, eingesetzt werden, sind gängigerweise zwischen der Spannungsquelle oder der Spannungsquellen des elektrischen Wechselspannungsnetzes und einer elektrischen Last eingeschaltet. Eine solche Vorrichtung zur Spannungserhaltung eines elektrischen Wechselspannungsnetzes ist beispielsweise in der US 5,099,410 angegeben. Darin ist ein Teilstromrichtersystem angegeben, welches ein erstes und ein dazu parallel geschaltetes zweites Zweigpaar aufweist, wobei jedes Zweigpaar aus zwei in Serie geschalteten ansteuerbaren Leistungshalbleiterschaltern mit jeweils einer zu jedem Leistungshalbleiterschalter antiparallel geschalteten Diode gebildet ist. Der Verbindungspunkt der Leistungshalbleiterschalter des ersten Zweigpaars bildet weiterhin einen ersten Anschluss des Teilstromrichtersystems, wobei am ersten Anschluss üblicherweise die elektrische Last angeschlossen ist. Ferner bildet der Verbindungspunkt der Leistungshalbleiterschalter des zweiten Zweigpaars einen zweiten Anschluss des Teilstromrichtersystems, an den die Spannungsquelle des elektrischen Wechselspannungsnetzes gängigerweise angeschlossen ist. Darüber hinaus ist ein aus zwei in Serie geschalteten Kondensatoren gebildeter elektrischer Energiespeicher vorgesehen.

Die Vorrichtung nach der US 5,099,410 ist für ein einphasiges elektrisches Wechselspannungsnetz ausgeführt und dient zum einen der Spannungserhöhung, insbesondere der Spannungsverdopplung zur Speisung der elektrischen Last und zum anderen als Vorrichtung zur unterbrechungsfreien Speisung der Last, wobei das Teilstromrichtersystem bei einem Spannungsabfall der Spannungsquelle derart angesteuert wird, dass sich an der am ersten Anschluss des Teilstromrichtersystems angeschlossenen Last im wesentlichen die Nennspannung der Spannungsquelle einstellt.

Ferner offenbart die US 6,160,722 ebenfalls eine Vorrichtung zur Spannungserhaltung eines elektrischen Wechselspannungsnetzes nach bisherigen Stand der Technik.

Problematisch bei der Vorrichtung gemäss der US 5,099,410 ist, dass zwar bei einem Abfall der Spannung der Spannungsquelle eine unterbrechungsfreie Speisung der elektrischen Last durch Spannungsstützung ermöglicht ist, jedoch ist diese Stützung der abgefallenen Spannung nur für eine kurze Zeit von wenigen Millisekunden möglich. Durch eine kapazitätsmässig grosse Auslegung des elektrischen Energiespeichers oder durch einen zusätzlichen Energiespeicher in Form eines Kondensators oder einer Batterie kann zwar diese Zeit verlängert werden, jedoch verursacht eine solche Auslegung des Energiespeichers oder das Vorsehen eines zusätzlichen Energiespeichers einen erheblichen Platzbedarf und einen erhöhten Material-, Montage- und Verschienungsaufwand.

### Darstellung der Erfindung

Aufgabe der Erfindung ist es deshalb, eine Vorrichtung zur Spannungserhaltung eines elektrischen Wechselspannungsnetzes anzugeben, die bei einem Abfall der Spannung einer Spannungsquelle des elektrischen Wechselspannungsnetzes eine Stützung der abgefallenen Spannung für einen langen Zeitraum ermöglicht und zudem einen besonders einfachen und kostengünstigen Aufbau aufweist, so dass der Platzbedarf und der Material-, Montage- und Verschienungsaufwand der Vorrichtung minimiert wird. Ferner ist ein Verfahren anzugeben, mit dem die erfindungsgemässe Vorrichtung besonders einfach und effizient betrieben werden kann. Diese Aufgaben werden durch die Merkmale der unabhängigen Ansprüche gelöst. In den abhängigen Ansprüchen sind vorteilhafte Weiterbildungen der Erfindung angegeben.

Bei der erfindungsgemässen Vorrichtung zur Spannungserhaltung eines elektrischen Wechselspannungsnetzes ist ein Teilstromrichtersystem vorgesehen, welches ein erstes Zweigpaar und ein dazu parallel geschaltetes zweites Zweigpaar und einen zu den Zweigpaaren parallel geschalteten elektrischen Energiespeicher aufweist, wobei jedes Zweigpaar aus zwei in Serie geschalteten ansteuerbaren Leistungshalbleiterschaltern mit jeweils einer zu jedem Leistungshalbleiterschalter antiparallel geschalteten Diode gebildet ist. Der Verbindungspunkt der Leistungshalbleiterschalter des ersten Zweigpaars bildet ferner einen ersten Anschluss des Teilstromrichtersystems. Weiterhin bildet der Verbindungspunkt der Leistungshalbleiterschalter des zweiten Zweigpaars einen zweiten Anschluss des Teilstromrichtersystems. Erfindungsgemäss weist das Teilstromrichtersystem ein aus zwei in Serie geschalteten ansteuerbaren Leistungshalbleiterschaltern mit jeweils einer zu jedem Leistungshalbleiterschalter antiparallel geschalteten Diode gebildetes drittes Zweigpaar auf, wobei das dritte Zweigpaar parallel zu dem ersten und zweiten Zweigpaar geschaltet ist und der Verbindungspunkt der Leistungshalbleiterschalter des dritten Zweigpaars einen dritten Anschluss des Teilstromrichtersystems bildet. Mittels des zweiten und dritten Zweigpaars ist es vorteilhaft möglich, bei einem Abfall der Spannung einer beispielsweise störungsbehafteten Spannungsquelle des elektrischen Wechselspannungsnetzes, an welche das Teilstromrichtersystem mit dem zweiten und dritten Anschluss angeschlossen ist, aus dieser fehlerhaften Spannungsquelle des elektrischen Wechselspannungsnetzes noch elektrische Energie zum Laden des elektrischen Energiespeichers zu beziehen, während mittels des ersten und zweiten Zweigpaars die Spannung am ersten Anschluss durch Bezug elektrischer Energie aus dem elektrischen Energiespeicher gestützt wird und somit eine Versorgung einer an den ersten Anschluss angeschlossenen elektrischen Last für einen langen Zeitraum gewährleistet werden kann. Auf eine kapazitätsmässig grosse Auslegung des elektrischen Energiespeichers oder auf einen zusätzlichen Energiespeicher in Form eines Kondensators oder einer Batterie wie aus dem Stand der Technik bekannt ist, kann damit vorteilhaft verzichtet werden, so dass die erfindungsgemässe Vorrichtung desweiteren mit einem geringen Platzbedarf auskommt, sich durch einen kleinen Material-, Montage- und Verschienungsaufwand auszeichnet und somit sehr einfach, wartungsextensiv und kostengünstig ist.

Beim erfindungsgemässen Verfahren zum Betrieb der Vorrichtung zur Spannungserhaltung eines elektrischen Wechselspannungsnetzes wird das erste und zweite Zweigpaar des Teilstromrichtersystems bei einem Spannungsabfall der an das Teilstromrichtersystem angeschlossenen Spannungsquelle des elektrischen Wechselspannungsnetzes derart angesteuert, dass sich am ersten Anschluss des Teilstromrichtersystems im wesentlichen die Nennspannung der Spannungsquelle einstellt. Vorteilhaft wird diese Einstellung dadurch erreicht, dass eine Kompensationsspannung zwischen dem ersten Anschluss und dem zweiten Anschluss des Teilstromrichtersystems eingeprägt wird, die den Spannungsabfall ausgleichen kann. Erfindungsgemäss wird zudem das zweite und dritte Zweigpaar derart angesteuert, dass der elektrische Energiespeicher von der Spannungsquelle geladen wird. Der Ladevorgang und die Kompensation des Spannungsabfalls laufen vorteilhaft im wesentlichen zeitgleich ab. Durch diese Ansteuerung des ersten, zweiten und dritten Zweigpaars kann vorteilhaft erreicht werden, dass zum einen aus der fehlerhaften Spannungsquelle mit ihrem dadurch bedingten Spannungsabfall noch elektrische Energie zum Laden des Energiespeichers bezogen werden kann, während vorteilhaft durch Einstellung der Spannung am ersten Anschluss auf im wesentlichen den Wert der Nennspannung der Spannungsquelle eine Spannungsstützung erzielt wird, durch die die Versorgung der an den ersten Anschluss angeschlossenen elektrischen Last für einen langen Zeitraum gewährleistet werden kann. Damit ermöglicht das erfindungsgemässe Verfahren einen besonders einfachen und ermöglicht das erfindungsgemässe Verfahren einen besonders einfachen und effizienten Betrieb der erfindungsgemässen Vorrichtung.

Diese und weitere Aufgaben, Vorteile und Merkmale der vorliegenden Erfindung werden aus der nachfolgenden detaillierten Beschreibung von bevorzugten Ausführungsbeispielen der Erfindung in Verbindung mit der Zeichnung offensichtlich.

### Kurze Beschreibung der Zeichnungen

Es zeigen:
- Fig. 1: eine erste Ausführungsform einer erfindungsgemässen Vorrichtung zur Spannungserhaltung eines elektrischen Wechselspannungsnetzes, insbesondere für ein einphasiges elektrisches Wechselspannungsnetz,
- Fig. 2: eine zweite Ausführungsform einer erfindungsgemässen Vorrichtung zur Spannungserhaltung eines elektrischen Wechselspannungsnetzes, insbesondere für ein einphasiges elektrisches Wechselspannungsnetz,
- Fig. 3: eine dritte Ausführungsform einer erfindungsgemässen Vorrichtung zur Spannungserhaltung eines elektrischen Wechselspannungsnetzes, insbesondere für ein mehrphasiges elektrisches Wechselspannungsnetz und
- Fig. 4: eine vierte Ausführungsform einer erfindungsgemässen Vorrichtung zur Spannungserhaltung eines elektrischen Wechselspannungsnetzes, insbesondere für ein mehrphasiges elektrisches Wechselspannungsnetz.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

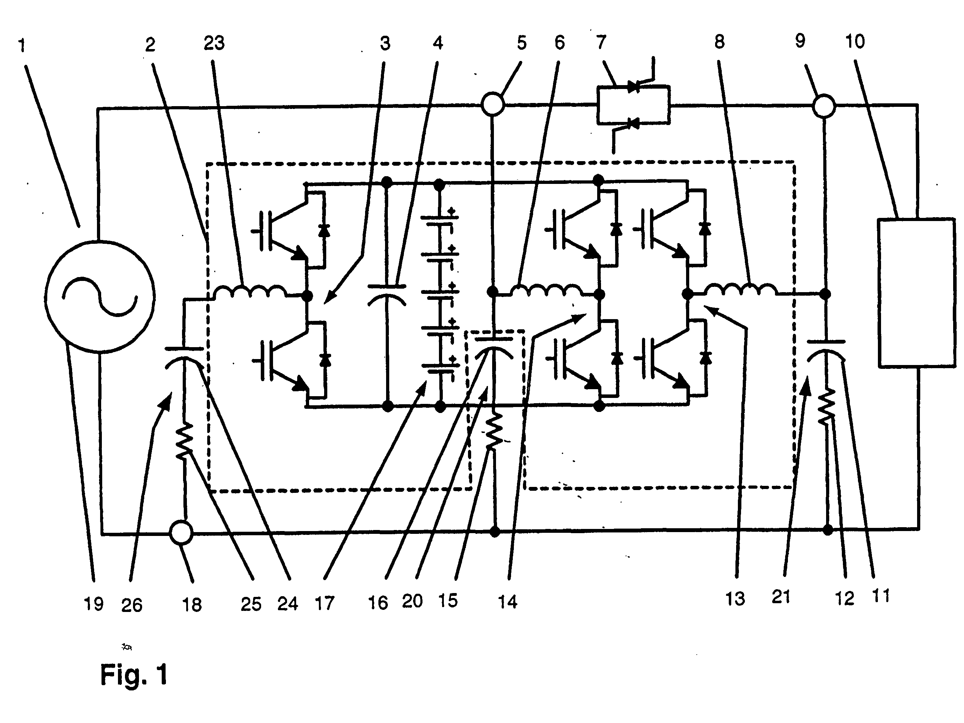

In Fig. 1 ist eine erste Ausführungsform einer erfindungsgemässen Vorrichtung zur Spannungserhaltung eines elektrischen Wechselspannungsnetzes 1, insbesondere für ein einphasiges elektrisches Wechselspannungsnetz 1 gezeigt. Das elektrische Wechselspannungsnetz 1 weist gemäss Fig. 1 eine zugehörige Spannungsquelle 19 auf. Gemäss Fig. 1 ist ein Teilstromrichtersystem 2 vorgesehen, welches ein erstes Zweigpaar 13 und ein dazu parallel geschaltetes zweites Zweigpaar 14 und einen zu den Zweigpaaren 13, 14 parallel geschalteten elektrischen Energiespeicher 4 aufweist, wobei jedes Zweigpaar 13, 14 aus zwei in Serie geschalteten ansteuerbaren Leistungshalbleiterschaltern mit jeweils einer zu jedem Leistungshalbleiterschalter antiparallel geschalteten Diode gebildet ist. Vorzugsweise ist als elektrischer Energiespeicher 4 ein Kondensator vorgesehen, der eine Vereinfachung und eine Platzersparnis gegenüber dem aus dem Stand der Technik bekannten, aus zwei in Serie geschalteten Kondensatoren gebildeten elektrischen Energiespeicher darstellt. Der Verbindungspunkt der Leistungshalbleiterschalter des ersten Zweigpaars 13 bildet weiterhin einen ersten Anschluss 9 des Teilstromrichtersystems 2. Zudem bildet der Verbindungspunkt der Leistungshalbleiterschalter des zweiten Zweigpaars 14 einen zweiten Anschluss 5 des Teilstromrichtersystems 2.

Erfindungsgemäss weist das Teilstromrichtersystem 2 ein drittes Zweigpaar 3 auf, welches aus zwei in Serie geschalteten ansteuerbaren Leistungshalbleiterschaltern mit jeweils einer zu jedem Leistungshalbleiterschalter antiparallel geschalteten Diode gebildet ist. Das dritte Zweigpaar 3 ist gemäss Fig. 1 parallel zu dem ersten und zweiten Zweigpaar 13, 14 geschaltet, wobei der Verbindungspunkt der Leistungshalbleiterschalter des dritten Zweigpaars 3 einen dritten Anschluss 18 des Teilstromrichtersystems 2 bildet. Gemäss Fig. 1 ist an den ersten Anschluss 9 und an den dritten Anschluss 18 eine elektrische Last 10 angeschlossen. Am zweiten Anschluss 5 und am dritten Anschluss 18 ist ferner die Spannungsquelle 19 angeschlossen. Durch das zweite Zweigpaar 14 und das dritte Zweigpaar 3 kann vorteilhaft erreicht werden, dass bei einem Abfall der Spannung der Spannungsquelle 19 infolge eines Fehlers oder einer Störung der Spannungsquelle 19 aus dieser noch ein gewisses Mass an elektrische Energie bezogen werden kann, welches zum Laden des elektrischen Energiespeichers 4 dient. Gleichzeitig kann mittels des ersten und zweiten Zweigpaars 13, 14 die Spannung am ersten Anschluss 9, und insbesondere bei einem einphasigen elektrischen Wechselspannungsnetz 1 zwischen dem ersten Anschluss 9 und dem dritten Anschluss 18, durch Bezug elektrischer Energie aus dem elektrischen Energiespeicher 4 gestützt werden, d.h. auf im wesentlichen den Wert der Nennspannung der Spannungsquelle 19 eingestellt und gehalten werden und somit eine Versorgung der an den ersten Anschluss 9, und insbesondere bei einem einphasigen elektrischen Wechselspannungsnetz 1 an den ersten Anschluss 9 und an den dritten Anschluss 18 angeschlossenen elektrischen Last 10 für einen langen Zeitraum erreicht und sichergestellt werden. Durch das zweite Zweigpaar 14 und das dritte Zweigpaar 3 kann zudem vorteilhaft erreicht werden, dass bei einem Anstieg der Spannung der Spannungsquelle 19 über die Nennspannung der Spannungsquelle 19 infolge eines Fehlers oder einer Störung der Spannungsquelle 19 aus dieser ein Überschuss an elektrische Energie bezogen werden kann, welches zum Laden des elektrischen Energiespeichers 4 dient. Gleichzeitig kann mittels des ersten und zweiten Zweigpaars 13, 14 die Spannung am ersten Anschluss 9 auf im wesentlichen den Wert der Nennspannung der Spannungsquelle 19 eingestellt und gehalten werden und somit eine Versorgung der an den ersten Anschluss 9 angeschlossenen elektrischen Last 10 für einen langen Zeitraum erreicht und sichergestellt werden.

Die erfindungsgemässe Vorrichtung weist gemäss Fig. 1 weiterhin einen ansteuerbaren Trennschalter 7 auf, der zwischen dem ersten Anschluss 9 und dem zweiten Anschluss 5 eingeschaltet ist. Im Normalbetrieb des elektrischen Wechselspannungsnetzes 1, d.h. bei keinem Spannungsabfall der Spannungsquelle 19 ist der Trennschalter 7 geschlossen, so dass der erste Anschluss 9 und der zweite Anschluss 5 miteinander verbunden sind und die elektrische Last 10 vorteilhaft direkt mit der Spannungsquelle 19 verbunden ist und von dieser gespeist wird. Eine solche direkte Speisung der elektrischen Last 10 durch die Spannungsquelle 19 bei einem normalen Betrieb des Wechselspannungsnetzes 1 ist mit der aus dem Stand der Technik bekannten Vorrichtung zur Spannungserhaltung nicht möglich. Darüber hinaus ist erfindungsgemäss eine erste Induktivität 6 zwischen dem Verbindungspunkt der Leistungshalbleiterschalter des zweiten Zweigpaars 14 und dem zweiten Anschluss 5 eingeschaltet, welche vorteilhaft der Glättung eines über den zweiten Anschluss 5 fliessenden Stromes dient. Ferner ist gemäss Fig. 1 eine zweite Induktivität 8 zwischen dem Verbindungspunkt der Leistungshalbleiterschalter des ersten Zweigpaars 13 und dem ersten Anschtuss 9 eingeschaltet, welche vorteilhaft der Glättung eines über den ersten Anschluss 9 fliessenden Stromes dient. Darüber hinaus ist gemäss Fig. 1 eine dritte Induktivität 23 zwischen dem Verbindungspunkt der Leistungshalbleiterschalter des dritten Zweigpaars 3 und dem dritten Anschluss 18 eingeschaltet, welche vorteilhaft der Glättung eines über den dritten Anschluss 18 fliessenden Stromes dient.

Gemäss Fig. 1 weist das Teilstromrichtersystem einen zu dem ersten, zweiten und dritten Zweigpaar 13, 14, 3 parallel geschalteten elektrischen Batteriespeicher 17 auf, der optional vorgesehen sein kann und der der Bereitstellung zusätzlicher elektrischer Energie dient, wodurch eine vorteilhafte weitere Verlängerung des Zeitraums der Stützung der Spannung am ersten Anschluss 9 bei einem Spannungsabfall oder einer Spannungsüberhöhung über den Wert der Nennspannung der Spannungsquelle 19 erreicht werden kann. Alternativ ist der Batteriespeicher 17 vorteilhaft durch einen oder mehrere Kondensatoren sehr hoher Kapazität, nämlich durch sogenannte "Supercaps" gebildet.

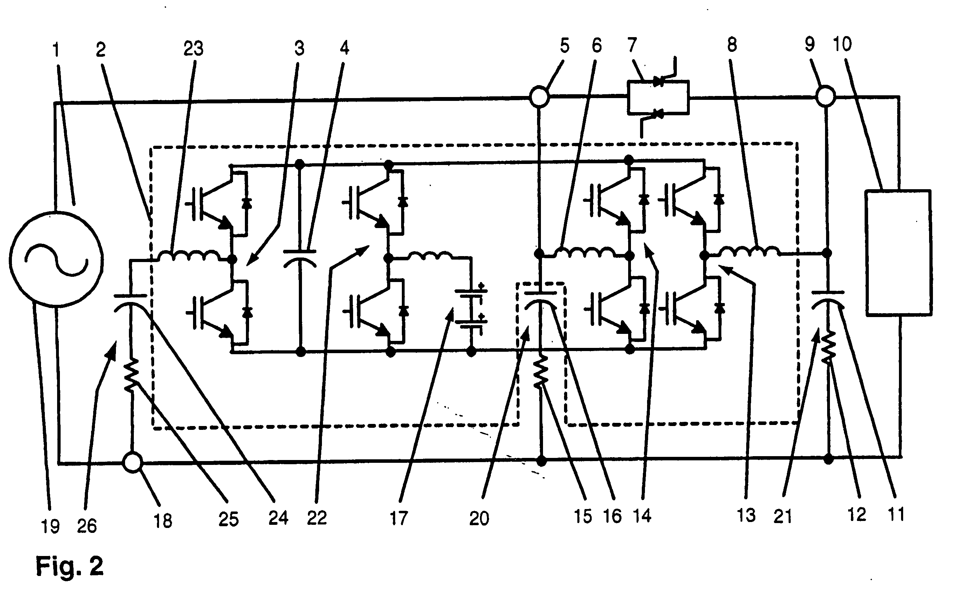

In einer zweiten Ausführungsform der Vorrichtung zur Spannungserhaltung eines elektrischen Wechselspannungsnetzes 1, insbesondere für ein einphasiges elektrisches Wechselspannungsnetz 1, gemäss Fig. 2 weist das Teilstromrichtersystem ein aus zwei in Serie geschalteten ansteuerbaren Leistungshalbleiterschaltern mit jeweils einer zu jedem Leistungshalbleiterschalter antiparallel geschalteten Diode gebildetes viertes Zweigpaar 22 aufweist, welches parallel zu den anderen Zweigpaaren 13, 14, 3 geschaltet ist. Im Unterschied zur ersten Ausführungsform der Vorrichtung gemäss Fig. 1 ist der Batteriespeicher 17 des Teilstromrichtersystems 2 gemäss Fig. 2 mit dem vierten Zweigpaar 22 verbunden ist. Vorzugsweise ist der Batteriespeicher 17 über eine Induktivität parallel zu einem ansteuerbaren Leistungshalbleiterschalter des vierten Zweigpaars 22 geschaltet. Mit dem vierten Zweigpaar 22 ist es durch entsprechende Ansteuerung der Leistungshalbleiterschalter des vierten Zweigpaars 22 vorteilhaft möglich, den Batteriespeicher 17 beispielsweise im Falle des vorstehend bereits erwähnten Normalbetriebs des elektrischen Wechselspannungsnetzes 1, d.h. bei keinem Spannungsabfall der Spannungsquelle 19, zu laden. Im Falle eines Spannungsabfalls der Spannungsquelle 19 kann dann elektrische Energie aus dem Batteriespeicher 17 durch entsprechende Ansteuerung der Leistungshalbleiterschalter des vierten Zweigpaar 22 gezielt, d.h. je nach Bedarf beziehungsweise in Abhängigkeit der Höhe und der Zeitdauer des Spannungsabfalls bereitgestellt werden, wodurch vorteilhaft eine weitere Verlängerung des Zeitraums der Stützung der Spannung am ersten Anschluss 9 bei einem Spannungsabfall der Spannungsquelle 19 erreicht werden kann. Weiterhin kann mittels des vierten Zweigpaars 22 die Spannung des Batteriespeichers 17 klein gewählt werden, so dass es keiner oder nur einer geringen Anzahl an in Serie geschalteten Batteriezellen des Batteriespeichers 17 bedarf. Zudem kann durch Einstellung der Spannung des Batteriespeichers 17 mittels des vierten Zweigpaars 22 die Lebensdauer des Batteriespeichers 17 vorteilhaft verlängert werden.

Zur Verbesserung der Netzrückwirkungen, d.h. zur Verminderung unerwünschter Schwingungen, insbesondere Oberschwingungen bezüglich der Spannung der Spannungsquelle 19, hervorgerufen durch die erfindungsgemässe Vorrichtung ist optional ein in Fig. 1 und Fig. 2 gezeigtes erstes Filter 20 zwischen dem dritten Anschluss 18 und dem zweiten Anschluss 5 eingeschaltet, welches durch eine erste Filterkapazität 16 und einen dazu in Serie geschalteten ersten Filterwiderstand 15 gebildet ist. Desweiteren ist zwischen dem dritten Anschluss 18 und dem ersten Anschluss 9 ein durch eine zweite Filterkapazität 11 und einen dazu in Serie geschalteten zweiten Filterwiderstand 12 gebildetes zweites Filter 21 optional eingeschaltet. Dieses zweite Filter 21 dient vorteilhaft der Erzeugung einer möglichst sinusförmigen Spannung am ersten Anschluss 9. Darüber hinaus ist zwischen dem dritten Anschluss 18 und der dritten Induktivität 23 ein durch eine dritte Filterkapazität 24 und einen dazu in Serie geschalteten dritten Filterwiderstand 25 gebildetes drittes Filter 26 optional eingeschaltet. Dieses dritte Filter 26 dient vorteilhaft ebenfalls der Erzeugung einer möglichst sinusförmigen Spannung am ersten Anschluss 9.

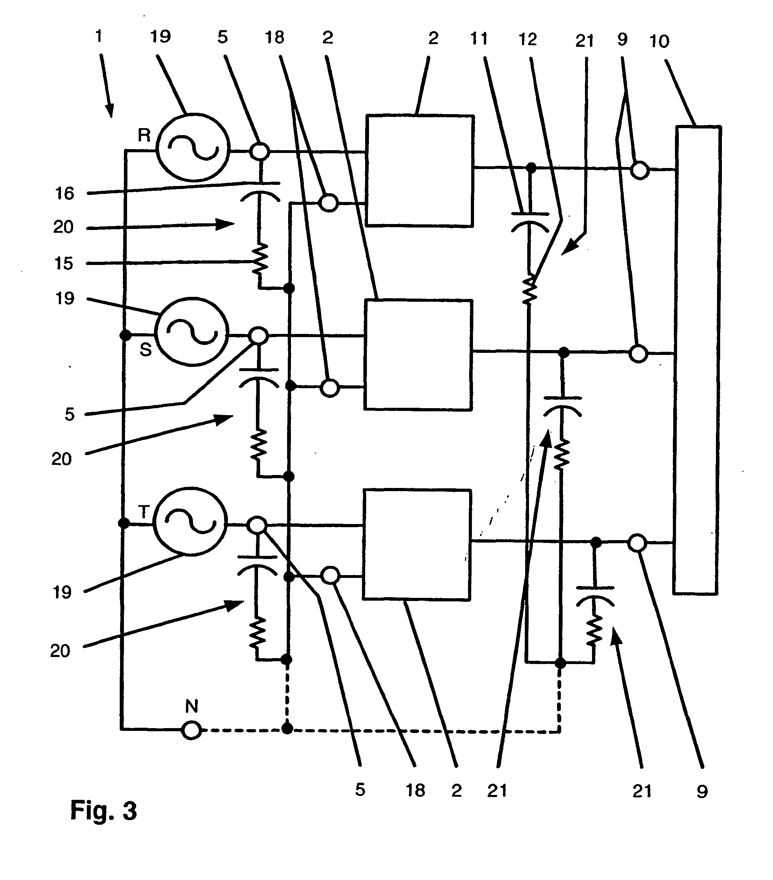

In Fig. 3 ist eine dritte Ausführungsform der erfindungsgemässen Vorrichtung zur Spannungserhaltung des elektrischen Wechselspannungsnetzes 1, insbesondere für ein mehrphasiges elektrisches Wechselspannungsnetz 1, gezeigt, wobei das elektrische Wechselspannungsnetz 1 gemäss Fig. 3 beispielhaft dreiphasig, d.h. mit drei Phasen R, S, T und mit je einer zu jeder Phase R, S, T zugehörigen Spannungsquelle 19 ausgeführt ist. Für jede Phase R, S, T ist ein Teilstromrichtersystem 2 gemäss der vorstehend beschriebenen Ausführungsformen gemäss Fig. 1 oder Fig. 2 vorgesehen, wobei die dritten Anschlüsse 18 vorzugsweise miteinander verbunden sind. Desweiteren ist gemäss Fig. 3 bei jedem Teilstromrichtersystem 2 zwischen dem zweiten Anschluss 5 und dem dritten Anschluss 18 das erste Filter 20 angeschlossen. Durch die vorzugsweise Verbindung der dritten Anschlüsse 18 miteinander gemäss Fig. 3 und die zwischen den zweiten Anschlüssen 5 und den dritten Anschlüssen18 angeschlossenen ersten Filter 20, sind auch sämtliche erste Filter 20 gemäss Fig. 3 miteinander verbunden. Alternativ zu Fig. 3 ist nur am zweiten Anschluss 5 eines jeden Teilstromrichtersystems 2 das erste Filter 20 eingeschaltet, wobei die ersten Filter 20 miteinander verbunden sind und die dritten Anschlüsse 18 vorzugsweise miteinander verbunden sind. Bezogen auf die Filter 20 ist eine derartige Anordnung der ersten Filter 20 beispielsweise in einer vierten Ausführungsform der erfindungsgemässen Vorrichtung zur Spannungserhaltung des elektrischen Wechselspannungsnetzes 1, gezeigt, wobei die vierte Ausführungsform der erfindungsgemässen Vorrichtung später folgend detailliert beschrieben wird.

Zudem ist bei der Ausführungsform der Vorrichtung gemäss Fig. 3 bei jedem Teilstromrichtersystem 2 am ersten Anschluss 9 ein zweites Filter 21 angeschlossen, wobei das zweite Filter 21, wie bereits beschrieben, durch eine zweite Filterkapazität 11 und einen dazu in Serie geschalteten zweiten Filterwiderstand 12 gebildet ist. Die zweiten Filter 21 sind gemäss Fig. 3 miteinander verbunden. Das dritte Filter 26 des Teilstromrichtersystems 2 gemäss Fig. 1 und Fig. 2 kann bei der Ausführungsform gemäss Fig. 3 vorteilhaft optional weggelassen werden. Darüber hinaus sind sämtliche Spannungsquellen 19 miteinander verbunden und bilden am Verbindungspunkt einen Nullpunktanschluss N. Optional ist der Nullpunktanschluss N gemäss Fig. 3 mit der Verbindungspunkt der dritten Anschlüsse 18 und mit dem Verbindungspunkt der zweiten Filter 21 verbunden, wobei diese optionale Verbindung durch die gestrichelt gezeichnete Verbindung in Fig. 3 dargestellt ist. Neben den bereits bei den Ausführungsformen gemäss Fig. 1 und Fig. 2 genannten Vorteilen liegt bei der Ausführungsform nach Fig. 3 jedes erste Filter 20 und jedes zweite Filter 21 durch die optionale Verbindung vorteilhaft auf dem Potential des Nullpunktanschlusses N der Spannungsquellen 19. Ist der Nullpunktanschluss N beispielsweise weit entfernt von den dritten Anschlüssen 18 oder den ersten Filtern 20 oder den zweiten Filtern 21 und somit nur schwer oder nicht zugänglich, so kann auf die Verbindung verzichtet werden.

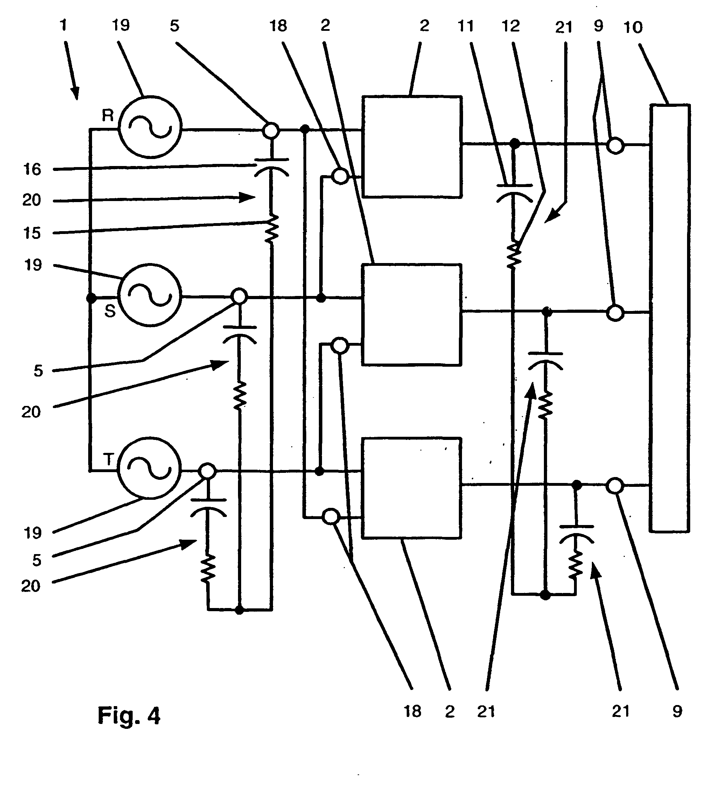

In Fig. 4 ist die vierte Ausführungsform der erfindungsgemässen Vorrichtung zur Spannungserhaltung des elektrischen Wechselspannungsnetzes 1, insbesondere für ein mehrphasiges elektrisches Wechselspannungsnetz 1, dargestellt, die sich von der vorstehend beschriebenen Ausführungsform gemäss Fig. 3 dahingehend unterscheidet, dass jeder dritte Anschluss 18 eines zugehörigen Teilstromrichtersystems 2 einer Phase R, S, T mit einem zweiten Anschluss 5 eines Teilstromrichtersystems 2 einer anderen Phase R, S, T verbunden ist. Gemäss Fig. 4 ist am zweiten Anschluss 5 eines jeden Teilstromrichtersystems 2 das erste Filter 20 eingeschaltet, wobei die ersten Filter 20 miteinander verbunden sind. Darüber hinaus ist gemäss Fg. 4 bei jedem Teilstromrichtersystem 2 am ersten Anschluss 9 das zweite Filter 21 angeschlossen, wobei die zweiten Filter 21 miteinander verbunden sind. Die Vorteile der Ausführungsform der Vorrichtung nach Fig. 4 liegen neben den Vorteilen der Ausführungsform gemäss Fig. 3 zusätzlich darin, dass auf die Verbindung der dritten Anschlüsse 18 sowie dem Verbindungspunkt der zweiten Filter 21 jeweils zum Nullpunktanschluss N verzichtet werden kann. Weiterhin kann bei einem Spannungsabfall der Spannungsquelle 19 in einer der Phasen R, S, T Energie aus einer Spannungsquelle 19 einer anderen Phase R, S, T bezogen werden, welche dann, wie bereits bei den Ausführungsformen gemäss Fig. 1 und Fig. 2 beschrieben, zur Stützung der Spannung am ersten Anschluss 9 des Teilstromrichtersystems 9 der vom Spannungsabfall betroffenen Phase R, S, T vorteilhaft eingesetzt werden kann.

Auch für die Ausführungsformen gemäss Fig. 3 und Fig. 4 ist zwischen dem ersten Anschluss 9 und dem dritten Anschluss 5 der ansteuerbare Trennschalter 7 eingeschaltet, der aber in Fig. 3 und Fig. 4 der Übersichtlichkeit halber nicht dargestellt ist.

Es hat sich als besonders vorteilhaft erwiesen, den ersten Filterwiderstand 15, den zweiten Filterwiderstand 12 und den dritten Filterwiderstand 25 jeweils im Bereich von 0 Ohm bis 1000 Ohm auszuwählen.

Insgesamt kommt die erfindungsgemässe Vorrichtung mit einem geringen Platzbedarf aus, zeichnet sich durch einen kleinen Material-, Montage- und Verschienungsaufwand aus und somit sehr einfach, wartungsextensiv und kostengünstig. Zudem ermöglicht die erfindungsgemässe Vorrichtung gemäss den Ausführungsformen nach Fig. 3 oder Fig. 4 eine Beeinflussung der Spannung in einer oder mehreren Phasen R, S, T, falls eine Überspannung in einer oder mehrerer dieser Phasen R, S, T auftritt. In diesem Fall speist das Teilstromrichtersystem 2 elektrische Energie aus der oder den betroffenen Phasen R, S, T in den elektrischen Energiespeicher 4 und/oder in den Batteriespeicher 17, so dass die Überspannung vorteilhaft gesenkt werden kann.

Beim erfindungsgemässen Verfahren zum Betrieb der erfindungsgemässen Vorrichtung zur Spannungserhaltung des elektrischen Wechselspannungsnetzes 1 wird das erste und zweite Zweigpaar 13, 14 des Teilstromrichtersystems 2 bei einem Spannungsabfall der Spannungsquelle 19 des elektrischen Wechselspannungsnetzes 1 derart angesteuert, dass sich am ersten Anschluss 9, und insbesondere bei einem einphasigen elektrischen Wechselspannungsnetz 1 zwischen dem ersten Anschluss 9 und dem dritten Anschluss 18 des Teilstromrichtersystems 2 im wesentlichen die Nennspannung der zugehörigen Spannungsquelle 19 einstellt. Vorteilhaft wird diese Einstellung dadurch erreicht, dass eine Kompensationsspannung zwischen dem ersten Anschluss 9 und dem zweiten Anschluss 5 des Teilstromrichtersystems 2 eingeprägt wird, die den Spannungsabfall ausgleichen kann. Das zweite und dritte Zweigpaar 14, 3 wird darüber hinaus derart angesteuert, dass der elektrische Energiespeicher 4 von der zugehörigen Spannungsquelle 19 geladen wird. Der Ladevorgang des Energiespeichers 4 und der Kompensation des Spannungsabfalls laufen vorzugsweise im wesentlichen zeitgleich ab. Aus der fehlerhaften oder gestörten Spannungsquelle 19 kann durch diese Ansteuerung des ersten, zweiten und dritten Zweigpaars 13, 14, 3 noch vorteilhaft elektrische Energie zum Laden des Energiespeichers 4 bezogen werden, während zusätzlich durch Einstellung der Spannung am ersten Anschluss 9 auf im wesentlichen den Wert der Nennspannung der Spannungsquelle 19 eine Spannungsstützung am ersten Anschluss 9 erzielt wird, wodurch die Versorgung der an den ersten Anschluss 9 angeschlossenen elektrischen Last 10 für einen langen Zeitraum gewährleistet werden kann.

Nachfolgend wird zunächst das erfindungsgemässe Verfahren zum Betrieb der erfindungsgemässen Vorrichtung zur Spannungserhaltung des elektrischen Wechselspannungsnetzes 1 für den Fall keines Spannungsabfalls der Spannungsquelle 19 näher erläutert. Im Normalbetriebs des elektrischen Wechselspannungsnetzes 1, d.h. bei keinem Spannungsabfall der Spannungsquelle 19, wird der zwischen dem ersten Anschluss 9 und dem dritten Anschluss 18 eingeschaltete ansteuerbare Trennschalter 7 erfindungsgemäss geschlossen. Nach der Ausführungsform der erfindungsgemässen Vorrichtung gemäss Fig. 1 wird das zweite und dritte Zweigpaar 14, 3 beziehungsweise nach den Ausführungsformen der erfindungsgemässen Vorrichtung gemäss Fig. 3 oder Fig. 4 wird jedes zweite und dritte Zweigpaar 14, 3 im Falle keines Spannungsabfalls der zugehörigen Spannungsquelle 19 erfindungsgemäss derart angesteuert, dass der für jedes Teilstromrichtersystem 2 vorzugsweise vorgesehene und parallel zu den jeweiligen Zweigpaaren 13, 14, 3 geschaltete elektrische Batteriespeicher 17 von der zugehörigen Spannungsquelle 19 geladen wird. Dabei wird vorteilhaft ausgenutzt, dass im Falle keines Fehlers der Spannungsquelle 19 genügend elektrische Energie von der jeweiligen Spannungsquelle 19 zum Laden des entsprechenden Batteriespeichers 17 zur Verfügung steht und somit neben dem elektrischen Energiespeicher 4 zusätzlich elektrische Energie gespeichert werden kann, die bei einem Spannungsabfall der Spannungsquelle 19 zusätzlich zur Stützung der Spannung am ersten Anschluss 9 zur Verfügung gestellt werden kann.

Darüber hinaus wird nach dem erfindungsgemässen Verfahren bei einer Vorrichtung gemäss Fig. 2 das vierte Zweigpaar 22 des Teilstromrichtersystems 2 beziehungsweise das vierte Zweigpaar 22 eines jeden Teilstromrichtersystems 2 bei einer Vorrichtung gemäss Fig. 3 oder Fig. 4 mit Teilstromrichtersystemen 2 nach Fig. 2 im Falle keines Spannungsabfalls der zugehörigen Spannungsquelle 19 derart angesteuert, dass der mit dem vierten Zweigpaar 22 verbundene Batteriespeicher 17 geladen wird. Dabei wird ebenfalls, wie schon vorstehend für den zu den Zweigpaaren 13, 14, 3 parallel geschalteten Batteriespeicher 17 gemäss Fig. 1 erwähnt, vorteilhaft ausgenutzt, dass im Falle keines Fehlers der Spannungsquelle 19 genügend elektrische Energie von der jeweiligen Spannungsquelle 19 zum Laden des entsprechenden Batteriespeichers 17 zur Verfügung steht und somit neben dem elektrischen Energiespeicher 4 zusätzlich elektrische Energie gespeichert werden kann. Dann kann im Falle eines Spannungsabfalls der Spannungsquelle 19 vorteilhaft elektrische Energie aus dem Batteriespeicher 17 durch entsprechende Ansteuerung der Leistungshalbleiterschalter des vierten Zweigpaar 22 zusätzlich gezielt bereitgestellt werden, um die Spannung am ersten Anschluss 9 bei einem Spannungsabfall der Spannungsquelle 19 zu stützen. Weiterhin kann mittels des vierten Zweigpaars 22 die Spannung des Batteriespeichers 17 klein gewählt werden, so dass es keiner oder nur einer geringen Anzahl an in Serie geschalteten Batteriezellen des Batteriespeichers 17 bedarf. Zudem kann durch Einstellung der Spannung des Batteriespeichers 17 mittels des vierten Zweigpaars 22 die Lebensdauer des Batteriespeichers 17 vorteilhaft verlängert werden.

Ferner werden das erste Zweigpaar 13 und das zweite Zweigpaar 14 des Teilstromrichtersystems 2 gemäss Fig. 1 oder Fig. 2 beziehungsweise eines jeden Teilstromrichtersystems 2 gemäss Fig. 3 oder Fig. 4 synchron und das dritte Zweigpaar 3 des Teilstromrichtersystems 2 gemäss Fig. 1 oder Fig. 2 beziehungsweise eines jeden Teilstromrichtersystems 2 gemäss Fig. 3 oder Fig. 4 im Falle keines Spannungsabfalls der zugehörigen Spannungsquelle 19 derart angesteuert, dass mindestens eine bezüglich der Spannung der zugehörigen Spannungsquelle 19 harmonische Schwingung der am ersten Anschluss 9 des beziehungsweise eines jeden Teilstromrichtersystems 2 anliegenden Spannung im wesentlichen kompensiert wird. Dadurch kann eine gezielte aktive Ausfilterung einer Schwingung einer beliebig einstellbaren Frequenz der am ersten Anschluss 9 des beziehungsweise eines jeden Teilstromrichtersystems 2 anliegenden Spannung und des über den ersten Anschluss 9 des beziehungsweise eines jeden Teilstromrichtersystems 2 fliessenden Stromes durchgeführt werden. Zudem kann vorteilhaft der netzseitige Leistungsfaktor geregelt werden.

Weiterhin werden das erste Zweigpaar 13 und das zweite Zweigpaar 14 des Teilstromrichtersystems 2 gemäss Fig. 1 oder Fig. 2 beziehungsweise eines jeden Teilstromrichtersystems 2 gemäss Fig. 3 oder Fig. 4 synchron und das dritte Zweigpaar 3 des Teilstromrichtersystems 2 gemäss Fig. 1 oder Fig. 2 beziehungsweise eines jeden Teilstromrichtersystems 2 gemäss Fig. 3 oder Fig. 4 im Falle keines Spannungsabfalls der zugehörigen Spannungsquelle 19 derart angesteuert, dass ein einstellbarer Wert einer über den ersten Anschluss 9 des beziehungsweise eines jeden Teilstromrichtersystems 2 fliessenden Blindleistung im wesentlichen kompensiert wird. Dadurch kann eine gezielte Beeinflussung des Blindleistungsflusses über den ersten Anschluss 9, insbesondere eine gezielte Blindleistungskompensation durchgeführt werden, wobei die erfindungsgemässe Vorrichtung als Phasenschieber betrieben wird.

Darüber hinaus werden das erste Zweigpaar 13 und das zweite Zweigpaar 14 des Teilstromrichtersystems 2 gemäss Fig. 1 oder Fig. 2 beziehungsweise eines jeden Teilstromrichtersystems 2 gemäss Fig. 3 oder Fig. 4 synchron und das dritte Zweigpaar 3 des Teilstromrichtersystems 2 gemäss Fig. 1 oder Fig. 2 beziehungsweise eines jeden Teilstromrichtersystems 2 gemäss Fig. 3 oder Fig. 4 im Falle keines Spannungsabfalls der zugehörigen Spannungsquelle 19 derart angesteuert, dass eine am elektrischen Energiespeicher 4 anliegende Spannung auf einen vorgebbaren Sollwert ausgeregelt wird. Durch die Ausregelung kann sichergestellt werden, dass im wesentlichen stets der vorgebbare Sollwert der Spannung am elektrischen Energiespeicher 4 anliegt und damit ein Schalten dieser Spannung durch die Leistungshalbleiterschalter des erste, zweiten und dritten Zweigpaars 13, 14, 3 problemlos möglich ist, ohne dass weitere Schutzvorkehrungen für die Leistungshalbleiterschalter der Zweigpaare 13, 14, 3 beispielsweise durch Auslegung auf eine hohe Überspannung notwendig sind.

Im Folgenden wird das erfindungsgemässe Verfahren zum Betrieb der erfindungsgemässen Vorrichtung zur Spannungserhaltung des elektrischen Wechselspannungsnetzes 1 im Falle des Spannungsabfalls der Spannungsquelle 19 näher beschrieben, wobei die nachfolgend angegebenen Verfahrensschritte bei Bezug auf Komponenten der erfindungsgemässen Vorrichtung ohne explizite Angabe einer Ausführungsform der Vorrichtung auf sämtliche Ausführungsformen der Vorrichtung gemäss Fig. 1 bis Fig. 4 bezogen sind. Zunächst wird bei Auftreten des Spannungsabfalls der entsprechenden Spannungsquelle 19 des zugehörigen Teilstromrichtersystems 2 der Trennschalter 7 geöffnet und danach, wie bereits vorstehend erwähnt, das erste Zweigpaar 13 und das zweite Zweigpaar 14 derart angesteuert, dass am ersten Anschluss 9 im wesentlichen die Nennspannung der Spannungsquelle 19 eingestellt wird. Das zweite und dritte Zweigpaar 14, 3 wird weiterhin derart angesteuert, dass der elektrische Energiespeicher 4 von der zugehörigen Spannungsquelle 19, vorzugsweise kontinuierlich, geladen wird. Der Ladevorgang und die Kompensation des Spannungsabfalls laufen vorteilhaft im wesentlichen zeitgleich ab.

Vorzugsweise werden das erste Zweigpaar 13 und das zweite Zweigpaar 14 bei Öffnung des Trennschalters 17 derart angesteuert, dass ein über den Trennschalter 7 fliessender Strom, insbesondere ein Öffnungsstrom, innerhalb kleiner oder gleich 1 ms im wesentlichen auf den Wert 0A geführt wird. Mit Vorteil wird dieser Strom dabei in den Energiespeicher 4 geleitet, wodurch der Trennschalter 7 bei der Öffnung weniger stark belastet wird.

Desweiteren wird mittels der ersten Induktivität 6 ein über den zweiten Anschluss 5 fliessender Strom geglättet. Dadurch können vorteilhaft unerwünschte Schwingungen in diesem Strom reduziert werden, so dass sich insgesamt ein im wesentlichen sinusförmiger Verlauf dieses Stromes ergibt.

Mittels des ersten Filters 20 wird erfindungsgemäss mindestens eine Oberschwingung bezüglich der Spannung der Spannungsquelle 19 im wesentlichen ausgefiltert. Vorteilhaft können dadurch Netzrückwirkungen der erfindungsgemässen Vorrichtung verbessert werden, d.h. unerwünschte Schwingungen, insbesondere Oberschwingungen bezüglich der Spannung der Spannungsquelle 19 können vermindert werden.

Desweiteren wird mittels der zweiten Induktivität 8 ein über den ersten Anschluss 9 fliessender Strom geglättet, wodurch vorteilhaft unerwünschte Schwingungen in diesem Strom reduziert werden können, so dass sich insgesamt ein im wesentlichen sinusförmiger Verlauf dieses Stromes ergibt.

Mit Bezug auf die Ausführungsformen der erfindungsgemässen Vorrichtung nach Fig. 1 und Fig. 2 wird erfindungsgemäss für ein einphasiges elektrisches Wechselspannungsnetz 1 mittels des zweiten Filters 21 mindestens eine Oberschwingung bezüglich der Spannung der Spannungsquelle 19 im wesentlichen ausgefiltert. Vorteilhaft können dadurch auf der Lastseite unerwünschte Schwingungen, insbesondere Oberschwingungen bezüglich der Spannung der Spannungsquelle 19 vermindert werden und somit eine möglichst sinusförmigen Spannung am ersten Anschluss 9 erzeugt werden.

Ferner wird mittels der dritten Induktivität 8 ein über den dritten Anschluss 18 fliessender Strom geglättet, wodurch vorteilhaft unerwünschte Schwingungen in diesem Strom reduziert werden können, so dass sich insgesamt ein im wesentlichen sinusförmiger Verlauf dieses Stromes ergibt.

Mit Bezug auf die Ausführungsformen der erfindungsgemässen Vorrichtung nach Fig. 1 und Fig. 2 wird erfindungsgemäss für ein einphasiges elektrisches Wechselspannungsnetz 1 mittels des dritten Filters 26 mindestens eine Oberschwingung bezüglich der Spannung der Spannungsquelle 19 im wesentlichen ausgefiltert. Vorteilhaft können dadurch auf der Lastseite unerwünschte Schwingungen, insbesondere Oberschwingungen bezüglich der Spannung der Spannungsquelle 19 vermindert werden und somit ebenfalls eine möglichst sinusförmigen Spannung am ersten Anschluss 9 erzeugt werden.

Mit Bezug auf die Ausführungsformen der erfindungsgemässen Vorrichtung nach Fig. 3 ist erfindungsgemäss für ein mehrphasiges elektrisches Wechselspannungsnetz 1 für jede Phase R, S, T ein Teilstromrichtersystem 2 und jeweils eine daran angeschlossene Spannungsquelle 19 vorgesehen, wobei bei jedem Teilstromrichtersystem 2 mittels des zwischen dem dritten Anschluss 18 und dem zweiten Anschluss 5 eingeschalteten ersten Filters 20 mindestens eine Oberschwingung bezüglich der Spannung der zugehörigen Spannungsquelle 19 im wesentlichen ausgefiltert wird. Die dritten Anschlüsse 18 sind dabei gemäss Fig. 3 miteinander verbunden. Alternativ bezüglich Fig. 3 und mit Bezug auf Fig. 4 wird mittels des am zweiten Anschluss 5 eingeschalteten ersten Filters 20 mindestens eine Oberschwingung bezüglich der Spannung der zugehörigen Spannungsquelle 19 im wesentlichen ausgefiltert wird, wobei die ersten Filter 20 miteinander verbunden sind. Auch für das mehrphasig ausgebildete elektrische Wechselspannungsnetz 1 können somit vorteilhaft unerwünschte Netzrückwirkungen, insbesondere Oberschwingungen bezüglich der Spannung der Spannungsquelle 19 vermindert werden.

Mit Bezug auf die Ausführungsformen der erfindungsgemässen Vorrichtung nach Fig. 3 und Fig. 4 wird erfindungsgemäss für ein mehrphasiges elektrisches Wechselspannungsnetz 1 bei jedem Teilstromrichtersystem 2 mittels des am ersten Anschluss 9 eingeschalteten zweiten Filters 21 mindestens eine Oberschwingung bezüglich der Spannung der zugehörigen Spannungsquelle 19 im wesentlichen ausgefiltert wird, wobei die zweiten Filter 21 miteinander verbunden sind. Auch für das mehrphasig ausgebildete elektrische Wechselspannungsnetz 1 können dadurch vorteilhaft auf der Lastseite unerwünschte Schwingungen, insbesondere Oberschwingungen bezüglich der Spannung der Spannungsquelle 19 vermindert werden und somit eine möglichst sinusförmigen Spannung am jeweiligen ersten Anschluss 9 erzeugt werden.

Insgesamt stellt das erfindungsgemässe Verfahren zum Betrieb der erfindungsgemässen Vorrichtung zur Spannungserhaltung des elektrischen Wechselspannungsnetzes 1 eine besonders einfache und kostengünstige Lösung dar, mit welchem die Vorrichtung vorteilhaft sowohl bei einem Spannungsabfall einer Spannungsquelle 19 als auch bei keinem Spannungsabfall der Spannungsquelle 19 einfach und effizient betrieben werden kann, so dass jederzeit eine ausreichende Versorgung der elektrischen Last 10 gewährleistet werden kann.

### Bezugszeichenliste

- 1: Wechselspannungsnetz
- 2: Teilstromrichtersystem
- 3: drittes Zweigpaar
- 4: elektrischer Energiespeicher
- 5: zweiter Anschluss
- 6: erste Induktivität
- 7: ansteuerbarer Trennschalter
- 8: zweite Induktivität
- 9: erster Anschluss
- 10: elektrische Last
- 11: zweite Filterkapazität
- 12: zweiter Filterwiderstand
- 13: erstes Zweigpaar
- 14: zweites Zweigpaar
- 15: erster Filterwiderstand
- 16: erste Filterkapazität
- 17: Batteriespeicher
- 18: dritter Anschluss
- 19: Spannungsquelle
- 20: erstes Filter
- 21: zweites Filter
- 22: viertes Zweigpaar
- 23: dritte Induktivität
- 24: dritte Filterkapazität
- 25: dritter Filterwiderstand
- 26: drittes Filter

## Patentansprüche

1. Vorrichtung zur Spannungserhaltung eines elektrischen Wechselspannungsnetzes (1) mit einem Teilstromrichtersystem (2), welches ein erstes Zweigpaar (13) und ein dazu parallel geschaltetes zweites Zweigpaar (14) und einen zu den Zweigpaaren (13, 14) parallel geschalteten elektrischen Energiespeicher (4) aufweist, wobei jedes Zweigpaar (13, 14) aus zwei in Serie geschalteten ansteuerbaren Leistungshalbleiterschaltern mit jeweils einer zu jedem Leistungshalbleiterschalter antiparallel geschalteten Diode gebildet ist und der Verbindungspunkt der Leistungshalbleiterschalter des ersten Zweigpaars (13) einen ersten Anschluss (9) des Teilstromrichtersystems (2) bildet und der Verbindungspunkt der Leistungshalbleiterschalter des zweiten Zweigpaars (14) einen zweiten Anschluss (5) des Teilstromrichtersystems (2) bildet, und
wobei das Teilstromrichtersystem (2) ein aus zwei in Serie geschalteten ansteuerbaren Leistungshalbleiterschaltern mit jeweils einer zu jedem Leistungshalbleiterschalter antiparallel geschalteten Diode gebildetes drittes Zweigpaar (3) aufweist, das dritte Zweigpaar (3) parallel zu dem ersten und zweiten Zweigpaar (13, 14) geschaltet ist und der Verbindungspunkt der Leistungshalbleiterschalter des dritten Zweigpaars (3) einen dritten Anschluss (18) des Teilstromrichtersystems (2) bildet,
**dadurch gekennzeichnet,**
**dass** zwischen dem ersten Anschluss (9) und dem zweiten Anschluss (5) ein ansteuerbarer Trennschalter (7) eingeschaltet ist.

2. Vorrichtung nach Anspruch 1, **dadurch gekennzeichnet, dass** eine erste Induktivität (6) zwischen dem Verbindungspunkt der Leistungshalbleiterschalter des dritten Zweigpaars (3) und dem zweiten Anschluss (5) eingeschaltet ist.

3. Vorrichtung nach Anspruch 2, **dadurch gekennzeichnet, dass** zwischen dem dritten Anschluss (18) und dem zweiten Anschluss (5) ein durch eine erste Filterkapazität (16) und einen dazu in Serie geschalteten ersten Filterwiderstand (15) gebildetes erstes Filter (20) eingeschaltet ist.

4. Vorrichtung nach einem der vorhergehenden Ansprüche, **dadurch gekennzeichnet, dass** eine zweite Induktivität (8) zwischen dem Verbindungspunkt der Leistungshalbleiterschalter des ersten Zweigpaars (13) und dem ersten Anschluss (9) eingeschaltet ist.

5. Vorrichtung nach Anspruch 4, **dadurch gekennzeichnet, dass** zwischen dem dritten Anschluss (18) und dem ersten Anschluss (9) ein durch eine zweite Filterkapazität (11) und einen dazu in Serie geschalteten zweiten Filterwiderstand (12) gebildetes zweites Filter (21) eingeschaltet ist.

6. Vorrichtung nach einem der vorhergehenden Ansprüche, **dadurch gekennzeichnet, dass** eine dritte Induktivität (23) zwischen dem Verbindungspunkt der Leistungshalbleiterschalter des dritten Zweigpaars (3) und dem dritten Anschluss (18) eingeschaltet ist.

7. Vorrichtung nach Anspruch 6, **dadurch gekennzeichnet, dass** zwischen dem dritten Anschluss (18) und der dritten Induktivität (23) ein durch eine dritte Filterkapazität (24) und einen dazu in Serie geschalteten dritten Filterwiderstand (25) gebildetes drittes Filter (21) eingeschaltet ist.

8. Vorrichtung nach Anspruch 2, **dadurch gekennzeichnet, dass** für ein mehrphasiges elektrisches Wechselspannungsnetz (1) für jede Phase (R, S, T) ein Teilstromrichtersystem (2) vorgesehen ist, und dass die dritten Anschlüsse (18) miteinander verbunden sind.

9. Vorrichtung nach einem der Ansprüche 2 oder 4, **dadurch gekennzeichnet, dass** für ein mehrphasiges elektrisches Wechselspannungsnetz (1) für jede Phase (R, S, T) ein Teilstromrichtersystem (2) vorgesehen ist, und dass jeder dritte Anschluss (18) eines zugehörigen Teilstromrichtersystems (2) einer Phase (R, S, T) mit einem zweiten Anschluss (5) eines Teilstromrichtersystems (2) einer anderen Phase (R, S, T) verbunden ist.

10. Vorrichtung nach einem der Ansprüche 2, 8 oder 9, **dadurch gekennzeichnet, dass** für ein mehrphasiges elektrisches Wechselspannungsnetz (1) für jede Phase (R, S, T) ein Teilstromrichtersystem (2) vorgesehen ist,
dass am zweiten Anschluss (9) eines jeden Teilstromrichtersystems (2) ein durch eine erste Filterkapazität (16) und einen dazu in Serie geschalteten ersten Filterwiderstand (15) gebildetes erstes Filter (20) eingeschaltet ist, und
dass die ersten Filter (20) miteinander verbunden sind.

11. Vorrichtung nach Anspruch 4, **dadurch gekennzeichnet, dass** für ein mehrphasiges elektrisches Wechselspannungsnetz (1) für jede Phase (R, S, T) ein Teilstromrichtersystem (2) vorgesehen ist,
dass zwischen dem dritten Anschluss (18) und dem zweiten Anschluss (5) eines jeden Teilstromrichtersystems (2) ein durch eine erste Filterkapazität (16) und einen dazu in Serie geschalteten ersten Filterwiderstand (15) gebildetes erstes Filter (20) eingeschaltet ist.

12. Vorrichtung nach einem der Ansprüche 4, 8 oder 9, **dadurch gekennzeichnet, dass** für ein mehrphasiges elektrisches Wechselspannungsnetz (1) für jede Phase (R, S, T) ein Teilstromrichtersystem (2) vorgesehen ist,
dass am ersten Anschluss (9) eines jeden Teilstromrichtersystems (2) ein durch eine zweite Filterkapazität (11) und einen dazu in Serie geschalteten zweiten Filterwiderstand (12) gebildetes zweites Filter (21) eingeschaltet ist, und
dass die zweiten Filter (21) miteinander verbunden sind.

13. Vorrichtung nach Anspruch 8, **dadurch gekennzeichnet, dass** die Spannungsquellen (19) der Teilstromrichtersysteme (2) miteinander verbunden sind und der Verbindungspunkt einen Nullpunktanschluss (N) bildet, wobei der Verbindungspunkt der dritten Anschlüsse (18) mit dem Nullpunktanschluss (N) verbunden ist.

14. Vorrichtung nach Anspruch 12, **dadurch gekennzeichnet, dass** die Spannungsquellen (19) der Teilstromrichtersysteme (2) miteinander verbunden sind und der Verbindungspunkt einen Nullpunktanschluss (N) bildet, wobei der Verbindungspunkt der zweiten Filter (21) mit dem Nullpunktanschluss (N) verbunden ist.

15. Vorrichtung nach einem der vorhergehenden Ansprüche, **dadurch gekennzeichnet, dass** als elektrischer Energiespeicher (4) ein Kondensator vorgesehen ist.

16. Vorrichtung nach einem der Ansprüche 1 bis 15, **dadurch gekennzeichnet, dass** das Teilstromrichtersystem (2) einen zu den Zweigpaaren (13, 3, 14) parallel geschalteten elektrischen Batteriespeicher (17) aufweist.

17. Vorrichtung nach einem der Ansprüche 1 bis 15, **dadurch gekennzeichnet, dass** das Teilstromrichtersystem (2) ein aus zwei in Serie geschalteten ansteuerbaren Leistungshalbleiterschaltern mit jeweils einer zu jedem Leistungshalbleiterschalter antiparallel geschalteten Diode gebildetes viertes Zweigpaar (22) aufweist, wobei das vierte Zweigpaar (22) parallel zu den anderen Zweigpaaren (13, 14, 3) geschaltet ist.

18. Verfahren zum Betrieb einer Vorrichtung zur Spannungserhaltung eines elektrischen Wechselspannungsnetzes (1), wobei die Vorrichtung ein Teilstromrichtersystem (2) aufweist und das Teilstromrichtersystem (2) ein erstes Zweigpaar (13) und ein dazu parallel geschaltetes zweites Zweigpaar (14) und einen zu den Zweigpaaren (13, 14) parallel geschalteten elektrischen Energiespeicher (4) aufweist und jedes Zweigpaar (13, 14) aus zwei in Serie geschalteten ansteuerbaren Leistungshalbleiterschaltern mit jeweils einer zu jedem Leistungshalbleiterschalter antiparallel geschalteten Diode gebildet ist und der Verbindungspunkt der Leistungshalbleiterschalter des ersten Zweigpaars (13) einen ersten Anschluss (9) des Teilstromrichtersystems (2) bildet und der Verbindungspunkt der Leistungshalbleiterschalter des zweiten Zweigpaars (14) einen zweiten Anschluss (5) des Teilstromrichtersystems (2) bildet, und
wobei das Teilstromrichtersystem (2) ein aus zwei in Serie geschalteten ansteuerbaren Leistungshalbleiterschaltern mit jeweils einer zu jedem Leistungshalbleiterschalter antiparallel geschalteten Diode gebildetes drittes Zweigpaar (3) aufweist, das dritte Zweigpaar (3) parallel zu dem ersten und zweiten Zweigpaar (13, 14) geschaltet ist und der Verbindungspunkt der Leistungshalbleiterschalter des dritten Zweigpaars (3) einen dritten Anschluss (18) des Teilstromrichtersystems (2) bildet,
bei dem das Teilstromrichtersystem (2) bei einem Spannungsabfall einer an das Teilstromrichtersystem (2) angeschlossenen Spannungsquelle (19) des elektrischen Wechselspannungsnetzes (1) im wesentlichen die Nennspannung der Spannungsquelle (19) am ersten Anschluss (9) einstellt,
**dadurch gekennzeichnet,**
**dass** bei Auftreten des Spannungsabfalls der Spannungsquelle (19) ein zwischen dem ersten Anschluss (9) und dem zweiten Anschluss (5) eingeschalteter ansteuerbarer Trennschalter (7) geöffnet wird,
**dass** danach zur Einstellung der Nennspannung mittels des ersten Zweigpaars (13) und des zweiten Zweigpaars (14) eine Kompensationsspannung zwischen dem ersten Anschluss (9) und dem zweiten Anschluss (5) eingeprägt wird, wobei der Energiespeicher (4) mittels des zweiten Zweigpaars (14) und des dritten Zweigpaars (3) mit elektrischer Energie der Spannungsquelle (19) geladen wird.

19. Verfahren nach Anspruch 18, **dadurch gekennzeichnet, dass** bei Öffnung des Trennschalters (17) das erste Zweigpaar (13) und das zweite Zweigpaar (14), derart angesteuert werden, dass ein über den Trennschalter (7) fliessender Strom innerhalb kleiner oder gleich 1 ms im wesentlichen auf den Wert 0A geführt wird.

20. Verfahren nach einem der Ansprüche 18 oder19, **dadurch gekennzeichnet, dass** mittels einer zwischen dem Verbindungspunkt der Leistungshalbleiterschalter des zweiten Zweigpaars (14) und dem zweiten Anschluss (5) eingeschalteten ersten Induktivität (6) ein über den zweiten Anschluss (5) fliessender Strom geglättet wird.

21. Verfahren nach Anspruch 20, **dadurch gekennzeichnet, dass** mittels eines zwischen dem dritten Anschluss (18) und dem zweiten Anschluss (5) eingeschaltetes und durch eine erste Filterkapazität (16) und einen dazu in Serie geschalteten ersten Filterwiderstand (15) gebildetes erstes Filter (20) mindestens eine Oberschwingung bezüglich der Spannung der Spannungsquelle (19) im wesentlichen ausgefiltert wird.

22. Verfahren nach einem der Ansprüche 18 bis 21, **dadurch gekennzeichnet, dass** mittels einer zwischen dem Verbindungspunkt der Leistungshalbleiterschalter des ersten Zweigpaars (13) und dem ersten Anschluss (9) eingeschalteten zweiten Induktivität (8) ein über den ersten Anschluss (9) fliessender Strom geglättet wird.

23. Verfahren nach Anspruch 22, **dadurch gekennzeichnet, dass** mittels eines zwischen dem dritten Anschluss (18) und dem ersten Anschluss (9) eingeschaltetes und durch eine zweite Filterkapazität (11) und einen dazu in Serie geschalteten zweiten Filterwiderstand (12) gebildetes zweites Filter (21) mindestens eine Oberschwingung bezüglich der Spannung der Spannungsquelle (19) im wesentlichen ausgefiltert wird.

24. Verfahren nach einem der Ansprüche 18 bis 23, **dadurch gekennzeichnet, dass** mittels einer zwischen dem Verbindungspunkt der Leistungshalbleiterschalter des dritten Zweigpaars (3) und dem dritten Anschluss (18) eingeschalteten dritten Induktivität (23) ein über den dritten Anschluss (18) fliessender Strom geglättet wird.

25. Verfahren nach Anspruch 24, **dadurch gekennzeichnet, dass** mittels eines zwischen dem dritten Anschluss (18) und der dritten Induktivität (23) eingeschaltetes und durch eine dritte Filterkapazität (24) und einen dazu in Serie geschalteten dritten Filterwiderstand (25) gebildetes drittes Filter (26) mindestens eine Oberschwingung bezüglich der Spannung der Spannungsquelle (19) im wesentlichen ausgefiltert wird.

26. Verfahren nach einem der Ansprüche 18 oder 19, **dadurch gekennzeichnet, dass** für ein mehrphasiges elektrisches Wechselspannungsnetz (1) für jede Phase (R, S, T) ein Teilstromrichtersystem (2) und jeweils eine daran angeschlossene Spannungsquelle (19) vorgesehen ist und bei jedem Teilstromrichtersystem (2) mittels eines zwischen dem dritten Anschluss (18) und dem zweiten Anschluss (5) eingeschaltetes und durch eine erste Filterkapazität (16) und einen dazu in Serie geschalteten ersten Filterwiderstand (15) gebildetes erstes Filter (20) mindestens eine Oberschwingung bezüglich der Spannung der zugehörigen Spannungsquelle (19) im wesentlichen ausgefiltert wird, wobei die dritten Anschlüsse (18) miteinander verbunden sind.

27. Verfahren nach einem der Ansprüche 18 oder 19, **dadurch gekennzeichnet, dass** für ein mehrphasiges elektrisches Wechselspannungsnetz (1) für jede Phase (R, S, T) ein Teilstromrichtersystem (2) und jeweils eine daran angeschlossene Spannungsquelle (19) vorgesehen ist und bei jedem Teilstromrichtersystem (2) mittels eines am zweiten Anschluss (5) eingeschaltetes und durch eine erste Filterkapazität (16) und einen dazu in Serie geschalteten ersten Filterwiderstand (15) gebildetes erstes Filter (20) mindestens eine Oberschwingung bezüglich der Spannung der zugehörigen Spannungsquelle (19) im wesentlichen ausgefiltert wird, wobei die ersten Filter (20) miteinander verbunden sind.

28. Verfahren nach einem der Ansprüche 18, 19 oder 22, **dadurch gekennzeichnet, dass** für ein mehrphasiges elektrisches Wechselspannungsnetz (1) für jede Phase (R, S, T) ein Teilstromrichtersystem (2) und jeweils eine daran angeschlossene Spannungsquelle (19) vorgesehen ist und bei jedem Teilstromrichtersystem (2) mittels eines am ersten Anschluss (9) eingeschaltetes und durch eine zweite Filterkapazität (11) und einen dazu in Serie geschalteten zweiten Filterwiderstand (12) gebildetes zweites Filter (21) mindestens eine Oberschwingung bezüglich der Spannung der zugehörigen Spannungsquelle (19) im wesentlichen ausgefiltert wird, wobei die zweiten Filter (21) miteinander verbunden sind.

29. Verfahren nach einem der Ansprüche 18 bis 28, **dadurch gekennzeichnet, dass** im Falle keines Spannungsabfalls der zugehörigen Spannungsquelle (19) der ansteuerbare Trennschalter (7) geschlossen wird.

30. Verfahren nach Anspruch 29, **dadurch gekennzeichnet, dass** jedes zweite und dritte Zweigpaar (14, 3) im Falle keines Spannungsabfalls der zugehörigen Spannungsquelle (19) derart angesteuert wird, dass ein für jedes Teilstromrichtersystem (2) vorgesehener und parallel zu den jeweiligen Zweigpaaren (13, 3, 14) geschalteter elektrischer Batteriespeicher (17) von der zugehörigen Spannungsquelle (19) geladen wird.

31. Verfahren nach Anspruch 29, **dadurch gekennzeichnet, dass** ein viertes Zweigpaar (22) eines jeden Teilstromrichtersystems (2), welches aus zwei in Serie geschalteten ansteuerbaren Leistungshalbleiterschaltern mit jeweils einer zu jedem Leistungshalbleiterschalter antiparallel geschalteten Diode gebildet ist und parallel zu den jeweiligen Zweigpaaren (13, 14, 3) geschaltet ist, im Falle keines Spannungsabfalls der zugehörigen Spannungsquelle (19) derart angesteuert wird, dass ein mit dem vierten Zweigpaar (22) verbundener Batteriespeicher (17) geladen wird.

32. Verfahren nach einem der Ansprüche 29 bis 31 **dadurch gekennzeichnet, dass** im Falle keines Spannungsabfalls der zugehörigen Spannungsquelle (19) das erste Zweigpaar (13) und das zweite Zweigpaar (14) eines jeden Teilstromrichtersystems (2) synchron und das dritte Zweigpaar (3) eines jeden Teilstromrichtersystems (2) derart angesteuert werden, dass mindestens eine bezüglich der Spannung der zugehörigen Spannungsquelle (19) harmonische Schwingung der am ersten Anschluss (9) eines jeden Teilstromrichtersystems (2) anliegenden Spannung im wesentlichen kompensiert wird.

33. Verfahren nach einem der Ansprüche 29 bis 32, **dadurch gekennzeichnet, dass** im Falle keines Spannungsabfalls der zugehörigen Spannungsquelle (19) das erste Zweigpaar (13) und das zweite Zweigpaar (14) eines jeden Teilstromrichtersystems (2) synchron und das dritte Zweigpaar (3) eines jeden Teilstromrichtersystems (2) derart angesteuert werden, dass ein einstellbarer Wert einer über den ersten Anschluss (9) eines jeden Teilstromrichtersystems (2) fliessenden Blindleistung im wesentlichen kompensiert wird.

34. Verfahren nach einem der Ansprüche 29 bis 33, **dadurch gekennzeichnet, dass** im Falle keines Spannungsabfalls der zugehörigen Spannungsquelle (19) das erste Zweigpaar (13) und das zweite Zweigpaar (14) eines jeden Teilstromrichtersystems (2) synchron und das dritte Zweigpaar (3) eines jeden Teilstromrichtersystems (2) derart angesteuert werden, dass eine am elektrischen Energiespeicher (4) anliegende Spannung auf einen vorgebbaren Sollwert ausgeregelt wird.

## Claims

1. Apparatus for the voltage maintenance of an electrical AC voltage supply network (1) with a partial converter system (2), which has a first branch pair (13) and a second branch pair (14) connected in parallel therewith and an electrical energy store (4) connected in parallel with the branch pairs (13, 14), each branch pair (13, 14) being formed from two series-connected driveable power semiconductor switches with in each case a diode reverse-connected in parallel with each power semiconductor switch, and the junction point of the power semiconductor switches of the first branch pair (13) forming a first terminal (9) of the partial converter system (2) and the junction point of the power semiconductor switches of the second branch pair (14) forming a second terminal (5) of the partial converter system (2), and
the partial converter system (2) having a third branch pair (3) formed from two series-connected driveable power semiconductor switches with in each case a diode reverse-connected in parallel with each power semiconductor switch, the third branch pair (3) being connected in parallel with the first and second branch pairs (13, 14), and
the junction point of the power semiconductor switches of the third branch pair (3) forming a third terminal (18) of the partial converter system (2), **characterized in that** a driveable isolating switch (7) is connected in between the first terminal (9) and the second terminal (5).

2. Apparatus according to Claim 1, **characterized in that** a first inductance (6) is connected in between the junction point of the power semiconductor switches of the third branch pair (3) and the second terminal (5).

3. Apparatus according to Claim 2, **characterized in that** a first filter (20) formed by a first filter capacitance (16) and a first filter resistance (15) connected in series therewith is connected in between the third terminal (18) and the second terminal (5).

4. Apparatus according to one of the preceding claims, **characterized in that** a second inductance (8) is connected in between the junction point of the power semiconductor switches of the first branch pair (13) and the first terminal (9).

5. Apparatus according to Claim 4, **characterized in that** a second filter (21) formed by a second filter capacitance (11) and a second filter resistance (12) connected in series therewith is connected in between the third terminal (18) and the first terminal (9).

6. Apparatus according to one of the preceding claims, **characterized in that** a third inductance (23) is connected in between the junction point of the power semiconductor switches of the third branch pair (3) and the third terminal (18).

7. Apparatus according to Claim 6, **characterized in that** a third filter (21) formed by a third filter capacitance (24) and a third filter resistance (25) connected in series therewith is connected in between the third terminal (18) and the third inductance (23).

8. Apparatus according to Claim 2, **characterized in that**, for a polyphase electrical AC voltage supply network (1), a partial converter system (2) is provided for each phase (R, S, T) and **in that** the third terminals (18) are connected to one another.

9. Apparatus according to one of Claims 2 or 4, **characterized in that**, for a polyphase electrical AC voltage supply network (1), a partial converter system (2) is provided for each phase (R, S, T), and **in that** each third terminal (18) of an associated partial converter system (2) of one phase (R, S, T) is connected to a second terminal (5) of a partial converter system (2) of another phase (R, S, T).

10. Apparatus according to one of Claims 2, 8 or 9, **characterized in that**, for a polyphase electrical AC voltage supply network (1), a partial converter system (2) is provided for each phase (R, S, T),
**in that** a first filter (20) formed by a first filter capacitance (16) and a first filter resistance (15) connected in series therewith is connected to the second terminal (9), and
**in that** the first filters (20) are connected to one another.

11. Apparatus according to Claim 4, **characterized in that**, for a polyphase electrical AC voltage supply network (1), a partial converter system (2) is provided for each phase (R, S, T),
**in that** a first filter (20) formed by a first filter capacitance (16) and a first filter resistance (15) connected in series therewith is connected in between the third terminal (18) and the second terminal (5) of each partial converter system (2).

12. Apparatus according to one of Claims 4, 8 or 9, **characterized in that**, for a polyphase electrical AC voltage supply network (1), a partial converter system (2) is provided for each phase (R, S, T),
**in that** a second filter (21) formed by a second filter capacitance (11) and a second filter resistance (12) connected in series therewith is connected to the first terminal (9) of each partial converter system (2), and
**in that** the second filters (21) are connected to one another.

13. Apparatus according to Claim 8, **characterized in that** the voltage sources (19) of the partial converter systems (2) are connected to one another and the junction point forms a neutral point terminal (N), the junction point of the third terminals (18) being connected to the neutral point terminal (N).

14. Apparatus according to Claim 12, **characterized in that** the voltage sources (19) of the partial converter systems (2) are connected to one another and the junction point forms a neutral point terminal (N), the junction point of the second filters (21) being connected to the neutral point terminal (N).

15. Apparatus according to one of the preceding claims, **characterized in that** a capacitor is provided as electrical energy store (4).

16. Apparatus according to one of Claims 1 to 15, **characterized in that** the partial converter system (2) has an electrical battery store (17) connected in parallel with the branch pairs (13, 3, 14).

17. The apparatus according to one of Claims 1 to 15, **characterized in that** the partial converter system (2) has a fourth branch pair (22) formed from two series-connected driveable power semiconductor switches with in each case a diode reverse-connected in parallel with each power semiconductor switch, the fourth branch pair (22) being connected in parallel with the other branch pairs (13, 14, 3), and **in that** a battery store (17) is connected to the fourth branch pair (22).

18. Method for operating an apparatus for the voltage maintenance of an electrical AC voltage supply network (1), the apparatus having a partial converter system (2) and the partial converter system (2) having a first branch pair (13) and a second branch pair (14) connected in parallel therewith and an electrical energy store (4) connected in parallel with the branch pairs (13, 14), and each branch pair (13, 14) being formed from two series-connected driveable power semiconductor switches with in each case a diode reverse-connected in parallel with each power semiconductor switch, and the junction point of the power semiconductor switches of the first branch pair (13) forming a first terminal (9) of the partial converter system (2) and the junction point of the power semiconductor switches of the second branch pair (14) forming a second terminal (5) of the partial converter system (2), and
the partial converter system (2) having a third branch pair (3) formed from two series-connected driveable power semiconductor switches with in each case a diode reverse-connected in parallel with each power semiconductor switch, the third branch pair (3) being connected in parallel with the first and second branch pairs (13, 14), and
the junction point of the power semiconductor switches of the third branch pair (3) forming a third terminal (18) of the partial converter system (2),
in which, in the event of a fall in voltage of a voltage source (19) of the electrical AC voltage supply network (1), which voltage source is connected to the partial converter system (2), the partial converter system (2) essentially sets the rated voltage of the voltage source (19) at the first terminal (9), **characterized in that**, when the fall in voltage of the voltage source (19) occurs, a driveable isolating switch (7) connected in between the first terminal (9) and the second terminal (5) is opened, **in that** afterwards, for the purpose of setting the rated voltage by means of the first branch pair (13) and the second branch pair (14), a compensation voltage is impressed between the first terminal (9) and the second terminal (5), the energy store (4) being charged with electrical energy of the voltage source (19) by means of the second branch pair (14) and the third branch pair (3).

19. Method according to Claim 18, **characterized in that**, upon the opening of the isolating switch (7), the first branch pair (13) and the second branch pair (14) are driven in such a way that a current flowing via the isolating switch (7) is taken essentially to the value 0A within less than or equal to 1 ms.

20. Method according to one of Claims 18 or 19,
**characterized in that** a current flowing via the second terminal (5) is smoothed by means of a first inductance (6) connected in between the junction point of the power semiconductor switches of the second branch pair (14) and the second terminal (5).

21. Method according to Claim 20, **characterized in that** at least one harmonic with regard to the voltage of the voltage source (19) is essentially filtered out by means of a first filter (20), which is connected in between the third terminal (18) and the second terminal (5) and is formed by a first filter capacitance (16) and a first filter resistance (15) connected in series therewith.

22. Method according to one of Claims 18 to 21,
**characterized in that** a current flowing via the first terminal (9) is smoothed by means of a second inductance (8) connected in between the junction point of the power semiconductor switches of the first branch pair (13) and the first terminal (9).

23. Method according to Claim 22, **characterized in that** at least one harmonic with regard to the voltage of the voltage source (19) is essentially filtered out by means of a second filter (21), which is connected in between the third terminal (18) and the first terminal (9) and is formed by a second filter capacitance (11) and a second filter resistance (12) connected in series therewith.

24. Method according to one of Claims 18 to 23,
**characterized in that** a current flowing via the third terminal (18) is smoothed by means of a third inductance (23) connected in between the junction point of the power semiconductor switches of the third branch pair (3) and the third terminal (18).

25. Method according to Claim 24, **characterized in that** at least one harmonic with regard to the voltage of the voltage source (19) is essentially filtered out by means of a third filter (26), which is connected in between the third terminal (18) and the third inductance (23) and is formed by a third filter capacitance (24) and a third filter resistance (25) connected in series therewith.

26. The method according to one of Claims 18 or 19, **characterized in that**, for a polyphase electrical AC voltage supply network (1), a partial converter system (2) and in each case a voltage source (19) connected thereto are provided for each phase (R, S, T) and, in the case of each partial converter system (2), at least one harmonic with regard to the voltage of the associated voltage source (19) is essentially filtered out by means of a first filter (20), which is connected in between the third terminal (18) and the second terminal (5) and is formed by a first filter capacitance (16) and a first filter resistance (15) connected in series therewith, the third terminals (18) being connected to one another.

27. Method according to one of Claims 18 or 19,
**characterized in that**, for a polyphase electrical AC voltage supply network (1), a partial converter system (2) and in each case a voltage source (19) connected thereto are provided for each phase (R, S, T) and, in the case of each partial converter system (2), at least one harmonic with regard to the voltage of the associated voltage source (19) is essentially filtered out by means of a first filter (20), which is connected to the second terminal (5) and is formed by a first filter capacitance (16) and a first filter resistance (15) connected in series therewith, the first filters (20) being connected to one another.

28. The method according to one of Claims 18, 19 or 22, **characterized in that**, for a polyphase electrical AC voltage supply network (1), a partial converter system (2) and in each case a voltage source (19) connected thereto are provided for each phase (R, S, T) and, in the case of each partial converter system (2), at least one harmonic with regard to the voltage of the associated voltage source (19) is essentially filtered out by means of a second filter (21), which is connected to the first terminal (9) and is formed by a second filter capacitance (11) and a second filter resistance (12) connected in series therewith, the second filters (21) being connected to one another.

29. Method according to one of Claims 18 to 28, **characterized in that**, in the event of no fall in voltage of the associated voltage source (19), the driveable isolating switch (7) is closed.

30. Method according to Claim 29, **characterized in that**, in the event of no fall in voltage of the associated voltage source (19), each second and third branch pair (14, 3) is driven in such a way that an electrical battery store (17), which is provided for each partial converter system (2) and is connected in parallel with the respective branch pairs (13, 3, 14), is charged by the associated voltage source (19).

31. Method according to Claim 29, **characterized in that**, in the event of no fall in voltage of the associated voltage source (19), a fourth branch pair (22) of each partial converter system (2), which is formed from two series-connected driveable power semiconductor switches with in each case a diode reverse-connected in parallel with each power semiconductor switch and is connected in parallel with the respective branch pairs (13, 14, 3), is driven in such a way that a battery store (17) connected to the fourth branch pair (22) is charged.

32. Method according to one of Claims 29 to 31, **characterized in that**, in the event of no fall in voltage of the associated voltage source (19), the first branch pair (13) and the second branch pair (14) of each partial converter system (2) are driven synchronously and the third branch pair (3) of each partial converter system (2) is driven in such a way that at least one harmonic oscillation - with regard to the voltage of the associated voltage source (19) - of the voltage present at the first terminal (9) of each partial converter system (2) is essentially compensated for.

33. Method according to one of Claims 29 to 32, **characterized in that**, in the event of no fall in voltage of the associated voltage source (19), the first branch pair (13) and the second branch pair (14) of each partial converter system (2) are driven synchronously and the third branch pair (3) of each partial converter system (2) is driven in such a way that an adjustable value of a reactive power flowing via the first terminal (9) of each partial converter system (2) is essentially compensated for.

34. Method according to one of Claims 29 to 33, **characterized in that**, in the event of no fall in voltage of the associated voltage source (19), the first branch pair (13) and the second branch pair (14) of each partial converter system (2) are driven synchronously and the third branch pair (3) of each partial converter system (2) is driven in such a way that a voltage present at the electrical energy store (4) is corrected to a predeterminable desired value.

## Revendications

1. Dispositif pour maintenir la tension d'un réseau électrique à tension alternative (1) comprenant un système convertisseur partiel (2), qui présente une première paire de bras (13) et une seconde paire de bras (14) montée parallèlement à la première et un accumulateur d'énergie électrique (4) monté parallèlement aux paires de bras (13, 14), chaque paire de bras (13, 14) étant formée de deux interrupteurs à semi-conducteurs de puissance activables et montés en série et comprenant chacun une diode montée de façon antiparallèle par rapport à chaque interrupteur à semi-conducteurs de puissance et le point de liaison des interrupteurs à semi-conducteurs de puissance de la première paire de bras (13) formant un premier branchement (9) du système convertisseur partiel (2) et le point de liaison des interrupteurs à semi-conducteurs de puissance de la deuxième paire de bras (14) formant un second branchement (5) du système convertisseur partiel (2), et
le système convertisseur partiel (2) présentant une troisième paire de bras (3) formée de deux interrupteurs à semi-conducteurs de puissance activables et branchés en série et comprenant chacun une diode montée de façon antiparallèle par rapport à chaque interrupteur à semi-conducteurs de puissance, la troisième paire de bras (3) étant montée parallèlement à la première et à la seconde paires de bras (13, 14) et le point de liaison des interrupteurs à semi-conducteurs de puissance de la troisième paire de bras (3) formant un troisième branchement (18) du système convertisseur partiel (2),
**caractérisé en ce que**,
un disjoncteur (7) actionnable est mis en circuit entre le premier branchement (9) et le second branchement (5).

2. Dispositif selon la revendication 1, **caractérisé en ce qu'**une première inductance (6) est mise en route entre le point de liaison des interrupteurs à semi-conducteurs de puissance de la troisième paire de bras (3) et le second branchement (5).

3. Dispositif selon la revendication 2, **caractérisé en ce qu'**un premier filtre (20) formé par une première capacité de filtrage (6) et une première résistance de filtre (15) montée en série est intercalé entre le troisième branchement (18) et le second branchement (5).

4. Dispositif selon l'une quelconque des revendications précédentes, **caractérisé en ce qu'**une première inductance (8) est mise en route entre le point de liaison des interrupteurs à semi-conducteurs de puissance de la première paire de bras (13) et le premier branchement (9).

5. Dispositif selon la revendication 4, **caractérisé en ce qu'**un second filtre (21) formé par une seconde capacité de filtrage (11) et une résistance de filtre (12) branchée en série par rapport à celle-ci est mise en route entre le troisième branchement (18) et le premier branchement (9).

6. Dispositif selon l'une quelconque des revendications précédentes, **caractérisé en ce qu'**une troisième inductance (23) est mise en route entre le point de liaison des interrupteurs à semi-conducteurs de puissance de la troisième paire de bras (3) et le troisième branchement (18).

7. Dispositif selon la revendication 6, **caractérisé en ce qu'**un troisième filtre (21) formé par une troisième capacité de filtrage (24) et une troisième résistance de filtre (25) branchée en série par rapport à celle-ci est mise en route entre le troisième branchement (18) et la troisième inductance (23).

8. Dispositif selon la revendication 2, **caractérisé en ce qu'**un système convertisseur partiel (2) est prévu pour un réseau électrique polyphasé à tension alternative (1) pour chaque phase (R, S, T) et **en ce que** les troisièmes branchements (18) sont reliés entre eux.

9. Dispositif selon l'une quelconque des revendications 2 ou 4, **caractérisé en ce qu'**un système convertisseur partiel (2) est prévu pour un réseau électrique polyphasé à tension alternative (1) pour chaque phase (R, S, T) et **en ce que** chaque troisième branchement (18) d'un système convertisseur partiel (2) correspondant d'une phase (R, S, T) est relié à un second branchement (5) d'un système convertisseur partiel (2) d'une autre phase (R, S, T).

10. Dispositif selon l'une quelconque des revendications 2, 8 ou 9, **caractérisé en ce qu'**un système convertisseur partiel (2) est prévu pour un réseau électrique polyphasé à tension alternative (1) pour chaque phase (R, S, T),
**en ce qu'**un premier filtre (20) formé par une première capacité de filtrage (16) et une première résistance de filtre (15) montée en série par rapport à celle-ci est mise en route sur le second branchement (9) de chaque système convertisseur partiel (2), et **en ce que** les premiers filtres (20) sont reliés entre eux.

11. Dispositif selon la revendication 4, **caractérisé en ce qu'**un système convertisseur partiel (2) est prévu pour un réseau électrique polyphasé à tension alternative (1) pour chaque phase (R, S, T)
**en ce qu'**un premier filtre (20) formé par une première capacité de filtrage (16) et une première résistance de filtre (15) montée en série par rapport à celle-ci est mise en route entre le troisième branchement (18) et le second branchement (5) de chaque système convertisseur partiel (2).

12. Dispositif selon l'une quelconque des revendications 4, 8 ou 9, **caractérisé en ce qu'**un système convertisseur partiel (2) est prévu pour un réseau électrique polyphasé à tension alternative (1) pour chaque phase (R, S, T),
**en ce qu'**un second filtre (21) formé par une seconde capacité de filtrage (11) et une seconde résistance de filtre (12) montée en série par rapport à celle-ci est mise en route sur le premier branchement (9) de chaque système convertisseur partiel (2), et
**en ce que** les seconds filtres (21) sont reliés entre eux.

13. Dispositif selon la revendication 8, **caractérisé en ce que** les sources de tension (19) des systèmes convertisseurs partiels (2) sont reliées entre elles et le point de liaison forme un branchement zéro (N), le point de liaison des troisièmes branchements (18) étant relié au branchement zéro (N).

14. Dispositif selon la revendication 12, **caractérisé en ce que** les sources de tension (19) des systèmes convertisseurs partiels (2) sont reliées entre elles et le point de liaison forme un branchement zéro (N), le point de liaison des seconds filtres (21) étant relié au branchement zéro (N).

15. Dispositif selon l'une quelconque des revendications précédentes, **caractérisé en ce qu'**un condensateur est prévu comme accumulateur d'énergie électrique (4).

16. Dispositif selon l'une quelconque des revendications 1 à 15, **caractérisé en ce que** le système convertisseur partiel (2) présente un accumulateur de batterie (17) électrique monté en série par rapport aux paires de bras (13, 3, 14).

17. Dispositif selon l'une quelconque des revendications 1 à 15, **caractérisé en ce que** le système convertisseur partiel (2) présente une quatrième paire de bras (22) constituée de deux interrupteurs à semi-conducteurs de puissance actionnables et montés en série et comprenant chacun une diode montée de façon antiparallèle par rapport à chaque interrupteur à semi-conducteurs de puissance, la quatrième paire de bras (22) étant montée parallèlement aux autres paires de bras (13, 14, 3).

18. Procédé pour l'exploitation d'un dispositif pour maintenir la tension d'un réseau électrique à tension alternative (1), le dispositif présentant un système convertisseur partiel (2) et le système convertisseur partiel (2) présentant une première paire de bras (13) et une seconde paire de bras (14) montée parallèlement à la première et un accumulateur d'énergie électrique (4) monté parallèlement aux paires de bras (13, 14), et chaque paire de bras (13, 14) étant formée de deux interrupteurs à semi-conducteurs de puissance actionnables et montés en série et comprenant chacun une diode montée de façon antiparallèle par rapport à chaque interrupteur à semi-conducteurs de puissance et le point de liaison des interrupteurs à semi-conducteurs de puissance de la première paire de bras (13) formant un premier branchement (9) du système convertisseur partiel (2) et le point de liaison des interrupteurs à semi-conducteurs de puissance de la seconde paire de bras (14) formant un second branchement (5) du système convertisseur partiel (2), et
le système convertisseur partiel (2) présentant une troisième paire de bras (3) constituée de deux interrupteurs à semi-conducteurs de puissance actionnables et montés en série et présentant chacun une diode montée de façon antiparallèle par rapport à chaque interrupteur à semi-conducteurs de puissance, la troisième paire de bras (3) étant montée en parallèle par rapport à la première et à la seconde paires de bras (13, 14) et le point de liaison des interrupteurs à semi-conducteurs de puissance de la troisième paire de bras (3) formant un troisième branchement (18) du système convertisseur partiel (2), dans lequel le système convertisseur partiel (2) établit sensiblement la tension nominale de la source de tension (19) sur le premier branchement (9) lors d'une chute de tension d'une source de tension (19), raccordée au système convertisseur partiel (2), du réseau électrique à tension alternative (1),
**caractérisé en ce que**,
un disjoncteur (7) actionnable et intercalé entre le premier branchement (9) et le second branchement (5) est ouvert en cas d'apparition de chute de tension de la source de tension (19),
**en ce qu'**une tension de compensation est établie ensuite entre le premier branchement (9) et le second branchement (5) pour le réglage de la tension nominale au moyen de la première paire de bras (13) et de la seconde paire de bras (14), l'accumulateur d'énergie (4) étant chargé au moyen de la seconde paire de bras (14) et de la troisième paire de bras (3) avec l'énergie électrique de la source de tension (19).

19. Procédé selon la revendication 18, **caractérisé en ce que**, en cas d'ouverture du disjoncteur (17), la première paire de bras (13) et la seconde paire de bras (14) sont actionnées de telle sorte qu'un courant circulant par le disjoncteur (7) est guidé en l'espace d'un temps inférieur ou égal à 1 ms sensiblement sur la valeur 0A.

20. Procédé selon l'une quelconque des revendications 18 ou 19, **caractérisé en ce qu'**un courant circulant par le deuxième branchement (5) est lissé au moyen d'une première inductance (6) mise en route entre le point de liaison des interrupteurs à semi-conducteurs de puissance de la seconde paire de bras (14) et le second branchement (5).

21. Procédé selon la revendication 20, **caractérisé en ce qu'**au moins une vibration harmonique concernant la tension de la source de tension (19) est largement filtrée au moyen d'un premier filtre (20) intercalé entre le troisième branchement (18) et le second branchement (5) et formé par une première capacité de filtrage (16) et une première résistance de filtre (15) branchée en série par rapport à cette capacité.

22. Procédé selon l'une quelconque des revendications 18 à 21, **caractérisé en ce qu'**un courant circulant par le premier branchement (9) est lissé au moyen d'une seconde inductance (8) mise en route entre le point de liaison des interrupteurs à semi-conducteurs de puissance de la première paire de bras (13) et le premier branchement (9).

23. Procédé selon la revendication 22, **caractérisé en ce qu'**au moins une vibration harmonique concernant la tension de la source de tension (19) est largement filtrée au moyen d'un second filtre (21) intercalé entre le troisième branchement (18) et le premier branchement (9) et formé par une seconde capacité de filtrage (21) et une seconde résistance de filtre (12) montée en série par rapport à cette capacité.

24. Procédé selon l'une quelconque des revendications 18 à 23, **caractérisé en ce qu'**un courant circulant par le troisième branchement (18) est lissé au moyen d'une troisième inductance (23) mise en route entre le point de liaison des interrupteurs à semi-conducteurs de puissance de la troisième paire de bras (3) et le troisième branchement (18).

25. Procédé selon la revendication 24, **caractérisé en ce qu'**au moins une vibration harmonique concernant la tension de la source de tension (19) est largement filtrée au moyen d'un troisième filtre (26) intercalé entre le troisième branchement (18) et la troisième inductance (23) et formée par une troisième capacité de filtrage (24) et une troisième résistance de filtre (25) montée en série par rapport à cette capacité.

26. Procédé selon l'une quelconque des revendications 18 ou 19, **caractérisé en ce qu'**un système convertisseur partiel (2) et respectivement une source de tension (19) raccordée à celui-ci sont prévus pour un réseau électrique polyphasé à tension alternative (1) pour chaque phase (R, S, T) et sur chaque système convertisseur partiel (2), au moins une vibration harmonique concernant la tension de la source de tension correspondante (19) est largement filtrée au moyen d'un premier filtre (20) mis en circuit entre le troisième branchement (18) et le second branchement (5) et formé par une première capacité de filtrage (16) et une première résistance de filtre (15) montée en série par rapport à la capacité, les troisièmes branchements (18) étant reliés entre eux.

27. Procédé selon l'une quelconque des revendications 18 ou 19, **caractérisé en ce qu'**un système convertisseur partiel (2) et respectivement une source de tension (19) raccordée à ce système sont prévus pour un réseau électrique polyphasé à tension alternative (1) pour chaque phase (R, S, T) et sur chaque système convertisseur partiel (2), au moins une vibration harmonique concernant la tension de la source de tension (19) spécifique est largement filtrée au moyen d'un premier filtre (20) intercalé sur le second branchement (5) et formé par une première capacité de filtrage (16) et une première résistance de filtre (15) montée en série par rapport à cette capacité, les premiers filtres (20) étant reliés entre eux.

28. Procédé selon l'une quelconque des revendications 18, 19 ou 22, **caractérisé en ce qu'**un système convertisseur partiel (2) et respectivement une source de tension (19) raccordée à ce système sont prévus pour un réseau électrique polyphasé à tension alternative (1) pour chaque phase (R, S, T) et pour chaque système convertisseur partiel (2), au moins une vibration harmonique concernant la tension de la source de tension spécifique (19) est largement filtrée au moyen d'un second filtre (21) intercalé sur le premier branchement (19) et formé par une seconde capacité de filtre (11) et une seconde résistance de filtre (18) montée en série par rapport à cette capacité.

29. Procédé selon l'une quelconque des revendications 18 à 28, **caractérisé en ce que** le disjoncteur (7) actionnable est fermé dans le cas d'une absence de tension de la source de tension (19) correspondante.

30. Procédé selon la revendication 29, **caractérisé en ce que** chaque seconde et chaque troisième paires de bras (14, 3) sont actionnées dans le cas d'une absence de tension de la source de tension spécifique (19) de telle sorte qu'un accumulateur de batterie (17) électrique prévu pour chaque système convertisseur partiel (2) et branché parallèlement aux paires de bras (13, 3, 14) spécifiques est chargé par la source de tension (19) spécifique.

31. Procédé selon la revendication 29, **caractérisé en ce qu'**une quatrième paire de bras (22) de chaque système convertisseur partiel (2), qui est constituée de deux interrupteurs à semi-conducteurs de puissance actionnables et montés en série et comprenant chacun une diode montée de façon antiparallèle par rapport à chaque interrupteur à semi-conducteurs de puissance et est montée parallèlement aux paires de bras (13, 14, 3) respectives sont actionnés dans le cas d'une absence de tension de la source de tension (19) spécifique, de telle sorte qu'un accumulateur de batterie (17) relié à la quatrième paire de bras (22) est chargé.

32. Procédé selon l'une quelconque des revendications 29 à 31, **caractérisé en ce que**, dans le cas d'une absence de tension de la source de tension (19) spécifique, la première paire de bras (13) et la seconde paire de bras (14) de chaque système convertisseur partiel (2) sont actionnées de façon synchrone et la troisième paire de bras (3) de chaque système convertisseur partiel (2) est actionnée de telle sorte qu'au moins une vibration harmonique par rapport à la tension de la source de tension (19) spécifique de la tension appliquée sur le premier branchement (9) de chaque système convertisseur partiel (2) est sensiblement compensée.

33. Procédé selon l'une quelconque des revendications 29 à 32, **caractérisé ce que**, dans le cas d'une absence de tension de la source de tension (19) spécifique, la première paire de bras (13) et la seconde paire de bras (14) de chaque système convertisseur partiel (2) sont actionnées de façon synchrone et la troisième paire de bras (3) de chaque système convertisseur partiel (2) est actionnée de telle sorte qu'une valeur réglable d'une puissance apparente circulant par le premier branchement (9) de chaque système convertisseur partiel (2) est sensiblement compensée.

34. Procédé selon l'une quelconque des revendications 29 à 33, **caractérisé en ce que**, en cas d'absence de baisse de tension de la source de tension (19) spécifique, la première paire de bras (13) et la seconde paire de bras (14) de chaque système convertisseur partiel (2) sont activées de façon synchrone et la troisième paire de bras (3) de chaque système convertisseur partiel (2) est actionnée de telle sorte qu'une tension s'appliquant sur l'accumulateur d'énergie (4) électrique est réglée selon une valeur de consigne prédéfinissable.
